# EUROPEAN PATENT SPECIFICATION

(11) **EP 2 946 632 B1**
(45) Date of publication and mention of the grant of the patent: **15.05.2019**
(21) Application number: 14704672.6
(22) Date of filing: 17.01.2014
(51) Int. Cl.: H04W 76/14, H04W 88/02, H04W 88/04, H04W 88/08, H04W 92/20

(54) **NETWORK-ASSISTED D2D COMMUNICATION USING D2D CAPABILITY INFORMATION**
NETZWERKGESTÜTZTEN D2D-KOMMUNIKATION MITTELS D2D-KAPAZITÄTSINFORMATIONEN
COMMUNICATION D2D ASSISTÉE PAR UN RÉSEAU, UTILISANT DES INFORMATIONS DE CAPACITÉ D2D

(30) Priority: 18.01.2013 US 201361754316 P; 15.07.2013 US 201313942056
(43) Date of publication of application: 25.11.2015
(73) Proprietor: Telefonaktiebolaget LM Ericsson (publ), 164 83 Stockholm (SE)
(72) Inventor: BELLESCHI, Marco, SE-171 66 Solna (SE); DIMOU, Konstantinos, San Francisco CA 94123 (US)
(74) Representative: Haseltine Lake LLP
(86) International application number: PCT/IB2014/058363
(87) International publication number: WO 2014/111896

(56) References cited:
- WO-A1-2011/087408
- WO-A1-2012/152224
- US-A1- 2011 082 940
- US-A1- 2011 258 313

## Description

### Field of the Disclosure

The present disclosure relates to network-assisted Device-to-Device (D2D) communication.

### Background

Device-to-Device (D2D) communications in a frequency spectrum supported by a cellular communications network have the potential of increasing frequency spectrum and energy efficiency as well as allowing new peer-to-peer services by taking advantage of so called proximity and reuse gains. Possible scenarios for D2D include, for example, applications in proximity-based social networking, fast data transfer between devices, proximity-enabled communications between devices, point-to-multipoint communications, as well as national security and public safety applications, D2D communication in the cellular spectrum is currently studied by the 3rd Generation Partnership Project (3GPP) to facilitate proximity aware internetworking services. In 3GPP, D2D is also referred to as "Long Term Evolution (LTE) Direct."

Both academia and research have spurred considerable research efforts in the field of D2D communication. The most technological challenges in this field can be classified into two areas neighbor discovery procedures and radio resource management algorithms. With regard to neighbor discovery procedures, D2D capable devices in the proximity of each other need to detect one another and synchronize. The detection is far from being trivial since potentially any one of the thousands, millions, or billions of wireless devices connected to a cellular communications network can be a valid D2D candidate. Usually, device discovery is carried out by periodically broadcasting signals (e.g., beacons) from D2D capable devices (e.g., User Equipments (UEs)) interested in discovering other D2D capable devices (e.g. other D2D capable UEs, routers, femto enhanced Node Bs (eNBs), or the like) on the basis of some specific content identifier or available service.

As for radio resource management algorithms, the introduction of D2D communication between pairs of D2D capable devices (i.e., D2D pairs) generates new interference patterns in the existing LTE cellular communications network. For example, in D2D communications featuring an Orthogonal Frequency Division Multiplexing (OFDM) system, some D2D links may reuse some of the OFDM time-frequency Physical Resource Blocks (PRBs) to better capitalize on the proximity of corresponding D2D pairs. This causes the loss of intra-cell orthogonality that in some situations cannot be negligible. In this scenario, accurate scheduling of resource allocations, power control algorithms, and mode selection policies that decide whether a candidate D2D pair should be communicating using a D2D link or an ordinary cellular link are of critical importance.

D2D communications utilizing the frequency spectrum of a cellular communications network pose new challenges because, relative to cellular communications scenarios, the system needs to cope with new interference situations in which two D2D capable devices communicate with one another via a direct D2D link rather than via the cellular communications network. Moreover, many of the features that characterize legacy LTE cellular communications networks do not apply straightforward to D2D communications (e.g., Radio Resource Management (RRM)/power control/link adaptations algorithms, Hybrid Automatic Repeat Request (HARQ) retransmissions, Discontinuous Reception (DRX), time alignment, random access, etc.).

A basic requirement for Radio Access Network (RAN) entities that are to support D2D communications (e.g., eNBs and UEs) is that they should be able to coexist with legacy RAN entities as the D2D feature is gradually introduced into the existing RAN infrastructure. Consequently, D2D-related functionalities should be implemented taking the existing LTE infrastructure into account. In other words, RAN entities that are to support D2D communications must be compliant with the existing legacy RAN, and at same time offer new capabilities to the end users.

As such, there is a desire for RAN entities that support D2D communication in a cellular communications network.

WO 2012/152224 discloses a method for communications device operations including receiving a peer list at a communications device, where the peer list includes a list of reachable communications devices and device-to-device (D2D) capability information of the reachable communications devices, selecting a peer from the peer list, sending a content request comprising an indication of a content to a communications controller serving the communications device, and receiving the content from the peer over a channel established by the communications controller. WO 2011/087408 discloses methods of supporting ad hoc networking between UEs of a cellular network. A network node can access a UE capability database comprising information such as supported frequency bands, RATs and antenna modes, and determine that two UEs (UE1 and UE2) have matching capabilities and are able to communicate wirelessly. The network node then transmits an ad hoc paging message comprising the identifies of UE1 and UE2, and this allows them to establish an ad hoc network.

### Summary

The present invention is defined in the claims appended hereto.

Systems and methods related to Device-to-Device (D2D) communication in a cellular communications network are disclosed. In one example, a base station obtains D2D capability information for wireless devices, where the D2D capability information indicates that the wireless devices are physically capable of D2D communication. The base station also receives a D2D request from a first wireless device and, in response, determines that a D2D initialization procedure is to be performed. In response to determining that the D2D initialization is to be performed, the base station transmits a positive D2D decision to the first wireless device that includes information that enables the first wireless device to establish D2D communication with a second wireless device, where the second wireless device is one of the wireless devices that are physically capable of D2D communication.

In one particular example, determining that the D2D initialization procedure is to be performed includes determining that D2D communication is feasible between the first wireless device and the second wireless device, where the second wireless device is one of the wireless devices that are physically capable of D2D communication. In another example, determining that the D2D initialization procedure is to be performed includes determining that the second wireless device is physically capable of sharing a particular content item requested in the D2D request from the first wireless device, a particular content type requested in the D2D request from the first wireless device, a particular service requested in the D2D request from the first wireless device, and/or a particular service type requested in the D2D request from the first wireless device. In yet another example, determining that the D2D initialization procedure is to be performed includes determining that D2D communication is feasible between the first wireless device and the second wireless device, where the second wireless device is one of the wireless devices that are physically capable of D2D communication, and determining that the second wireless device is physically capable of sharing a particular content item requested in the D2D request from the first wireless device, a particular content type requested in the D2D request from the first wireless device, a particular service requested in the D2D request from the first wireless device, and/or a particular service type requested in the D2D request from the first wireless device.

In one example, the D2D request includes information that is indicative of a particular content item requested by the first wireless device, a particular content type requested by the first wireless device, a particular service requested by the first wireless device, and/or a particular service type requested by the first wireless device. In another example, the D2D request additionally or alternatively includes a geographic location of the first wireless device.

In one example, determining that the D2D initialization procedure is to be performed includes selecting one or more wireless devices, including the second wireless device, that are candidates for D2D communication with the first wireless device from the wireless devices that are physically capable of D2D communication. The positive D2D decision then includes a list of identifiers of the one or more wireless devices selected as candidates for D2D communication with the first wireless device. In one example, the list of identifiers reflects priorities assigned to the one or more wireless devices for D2D communication with the first wireless device. In one example, the priorities assigned to the one or more wireless devices are based on proximity to the first wireless device.

In one example, the cellular communications network is a Long Term Evolution (LTE) cellular communications network, and the positive D2D decision includes information that is indicative of a Physical Uplink Control Channel (PUCCH) resource to be used by the first wireless device and the second wireless device to exchange power control commands for D2D communication between the first wireless device and the second wireless device, information that is indicative of Physical Random Access Channel (PRACH) resources to be used by the first wireless device for a D2D discovery procedure to discover the second wireless device, and/or information that is indicative of a PRACH power setting to be used by the first wireless device for a D2D discovery procedure to discover the second wireless device.

In one example, the cellular communications network is an LTE cellular communications network, and the D2D request is included in a Radio Resource Control (RRC) connection request from the first wireless device. Further, in one example, the positive D2D decision is transmitted to the first wireless device in a RRC setup message.

In one example, the wireless devices that are physically capable of D2D communication include wireless devices that are physically capable of D2D communication and located within a cell served by the base station. Further, in one example, the base station obtains the D2D capability information for at least some of the wireless devices that are physically capable of D2D communication and located within the cell served by the base station by receiving the D2D capability information from those wireless devices. In one example, the base station obtains the D2D capability information for at least some of the wireless devices that are physically capable of D2D communication and located within the cell served by the base station by receiving the D2D capability information for those wireless devices from the cellular communications network during handovers of those wireless devices to the cell served by the base station.

In one example, the wireless devices that are physically capable of D2D communication include wireless devices that are physically capable of D2D communication and located within one or more neighboring cells adjacent to a cell served by the base station. Further, in one example, the base station obtains the D2D capability information for at least some of the wireless devices that are physically capable of D2D communication and located within the one or more neighboring cells adjacent to the cell served by the base station by receiving the D2D capability information for each of those wireless devices from a corresponding base station that serves a corresponding neighboring cell.

### Brief Description of the Drawing Figures

The accompanying drawing figures incorporated in and forming a part of this specification illustrate several aspects of the disclosure, and together with the description serve to explain the principles of the disclosure.
Figure 1 illustrates a cellular communications network that enables Device-to-Device (D2D) communication according to one embodiment of the present disclosure;
Figure 2 illustrates the operation of the cellular communications network of Figure 1 according to one embodiment of the present disclosure;
Figure 3 illustrates one example of a Radio Resource Control (RRC) ConnectionRequest message that includes a D2D request according to one embodiment of the present disclosure;
Figure 4 illustrates one example of an RRCConnectionSetup message that communicates a D2D decision from a base station to a wireless device according to one embodiment of the present disclosure;
Figures 5A and 5B illustrate a RadioResourceConfigDedicated Information Element (IE) of the RRCConnectionSetup message of Figure 4 according to one embodiment of the present disclosure;
Figures 6A and 6B illustrate a D2DPhysicalConfigDedicated IE of the RRCConnectionSetup message of Figure 4 according to one embodiment of the present disclosure,
Figure 7 is a flow chart that illustrates the operation of a base station to receive and process a D2D request from a wireless device according to one embodiment of the present disclosure;
Figure 8 is a flow chart that illustrates the operation of a wireless device to request and establish a D2D connection according to one embodiment of the present disclosure;
Figure 9 illustrates a RRCConnectionReestablishmentRequest message that is transmitted by a wireless device to request a D2D connection after either failing to establish a D2D connection or experiencing a D2D connection failure during an established D2D connection according to one embodiment of the present disclosure;
Figure 10 illustrates the operation of a base station to obtain D2D capability information from wireless devices that are physically capable of D2D communication and located within a corresponding cell according to one embodiment of the present disclosure;
Figure 11 illustrates a User Equipment (UE) Capability Enquiry message used to request D2D capability information from wireless devices according to one embodiment of the present disclosure;
Figure 12 illustrates a UECapabilityInformation message used to transmit D2D capability information from a wireless device to the cellular communications network according to one embodiment of the present disclosure;
Figure 13 illustrates an exchange of D2D capability information between base stations in a handover request according to one embodiment of the present disclosure;
Figures 14A and 14B illustrate information contained in a handover request transmitted from one base station to another base station that includes D2D capability information according to one embodiment of the present disclosure;
Figure 15 illustrates D2D capability information included in the handover request of Figures 14A and 14E according to one embodiment of the present disclosure;
Figure 16 illustrates the operation of the cellular communications network of Figure 1 to enable D2D communication between two wireless devices in neighboring cells according to one embodiment of the present disclosure;
Figure 17 illustrates the operation of the cellular communications network of Figure 1 to enable D2D communication between two wireless devices in neighboring cells according to one embodiment of the present disclosure;
Figure 18 illustrates one embodiment of the paging message of Figures 16 and 17;
Figure 19 illustrates the operation of the cellular communications network to exchange D2D capability information between base stations according to one embodiment of the present disclosure;
Figure 20 is a block diagram of one of the base stations of the cellular communications network of Figure 1 according to one embodiment of the present disclosure; and
Figure 21 is a block diagram of one of the wireless devices of Figure 1 according to one embodiment of the present disclosure.

### Detailed Description

Systems and methods for network-assisted Device-to-Device (D2D) communication are disclosed. In particular, systems and methods are disclosed for network-assisted device discovery. Device discovery, which is sometimes referred to as neighbor discovery or peer discovery, is a procedure that enables wireless devices that are in proximity to, or in the vicinity of, one another to detect each other and then establish D2D communication While the present disclosure is not limited to any particular type of cellular communications network, device discovery is expected to play an important role in new peer-to-peer, or D2D, services that will be supported by future 3^{rd} Generation Partnership Project (3GPP) Long Term Evolution (LTE) - Advanced features, such as D2D communication. As used herein, D2D communication is direct wireless communication between wireless devices that are in proximity to one another via a direct radio link (i.e., a D2D bearer). D2D communication promises to be a good candidate to support modern wireless peer-to-peer services in which, for example, end users can share content and/or services with other users in their surrounding area (e.g., share a large amount of data, share business and entertainment interests such as, for example, social networking, share applications such as gaming applications" or the like).

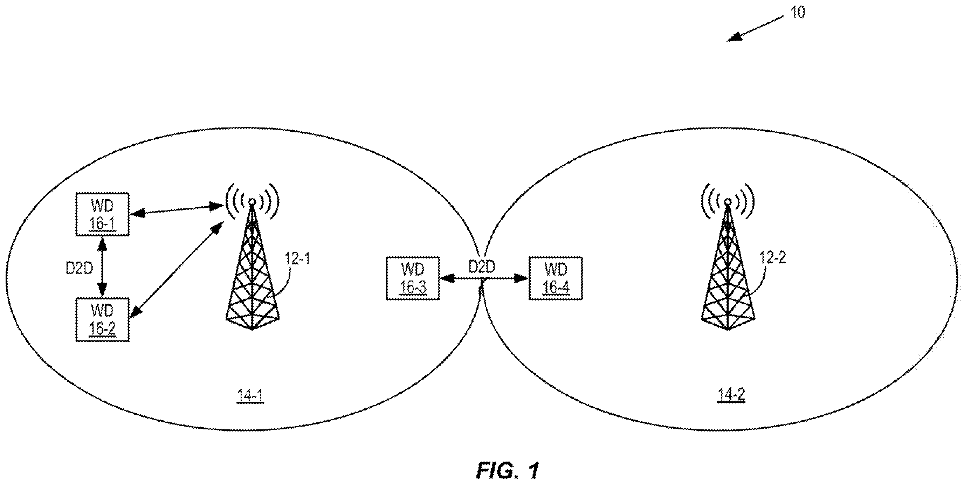

In this regard. Figure 1 illustrates a cellular communications network 10 that provides network-assisted device discovery for D2D communication according to one embodiment of the present disclosure. In many of the embodiments described herein, the cellular communications network 10 is a 3GPP LTE cellular communications network and, as such, 3GPP LTE terminology is at times used. However, the present disclosure is not limited to 3GPP LTE. Rather, the concepts disclosed herein can be used in any suitable type of cellular communications network that desires to provide network-assisted device discovery. As illustrated, the cellular communications network 10 includes base stations 12-1 and 12-2 (generally referred to herein collectively as base stations 12 and individually as base station 12) that serve corresponding cells 14-1 and 14-2 (generally referred to herein collectively as cells 14 and individually as cell 14). For LTE, the base stations 12 are preferably enhanced Node Bs (eNBs). However, one or both of the base stations 12 may alternatively be low power base stations (e.g., pico or femto base stations). Note that while only two base stations 12 are illustrated for clarity and ease of discussion, the cellular communications network 10 generally includes numerous base stations 12.

The base stations 12 operate to provide network-assisted device discovery for D2D communication Note that while the discussion below focuses on embodiments in which the base stations 12 operate to provide network-assisted device discovery, it should be noted that the functionality of the base stations 12 described herein with respect to network-assisted device discovery may additionally or alternatively be performed by other types of nodes in the cellular communications network 10 (e.g., relays). In this particular example, the base station 12-1 performs a network-assisted device discovery procedure by which a wireless device (WD) 16-1 discovers a wireless device 16-2 that is in proximity to the wireless device 16-1. As a result of the device discovery procedure, the wireless device 16-1 is enabled to establish D2D communication with the wireless device 16-2. In addition, in this example, the base stations 12-1 and 12-2 perform a device discovery procedure by which a wireless device 16-3 discovers a wireless device 16-4 that is in proximity to the wireless device 16-3 but located in a different cell 14, namely the cell 14-2. As a result of the device discovery procedure, the wireless device 16-3 is enabled to establish D2D communication with the wireless device 16-4.

The D2D communication between the wireless devices 16-1 and 16-2 and the D2D communication between the wireless devices 16-3 and 16-4 can use either a licensed frequency band of the cellular communications network 10 (e.g., either an uplink frequency band or a downlink frequency band of the cellular communications network 10) or some frequency band other than the licensed frequency band of the cellular communications network 10 (e.g., an unlicensed frequency spectrum or a frequency band of another cellular communications network). Notably, when using a frequency band other than a frequency band in the licensed spectrum of the cellular communications network 10, the wireless devices 16-1 through 16-4 (generally referred to herein collectively as wireless device 16 and individually as wireless device 16) about to communicate via a D2D link can use synchronization signals of the cellular communications network 10 and other signals broadcast or otherwise provided by the cellular communications network 10 for signaling purposes (i.e., device detection, direct connection establishment, allocation of resources to the D2D connection connection (link) maintenance, etc.). For instance, synchronization, device detection, and resource allocation can be performed using the licensed frequency band, whereas exchange of data can be performed in an unlicensed frequency band.

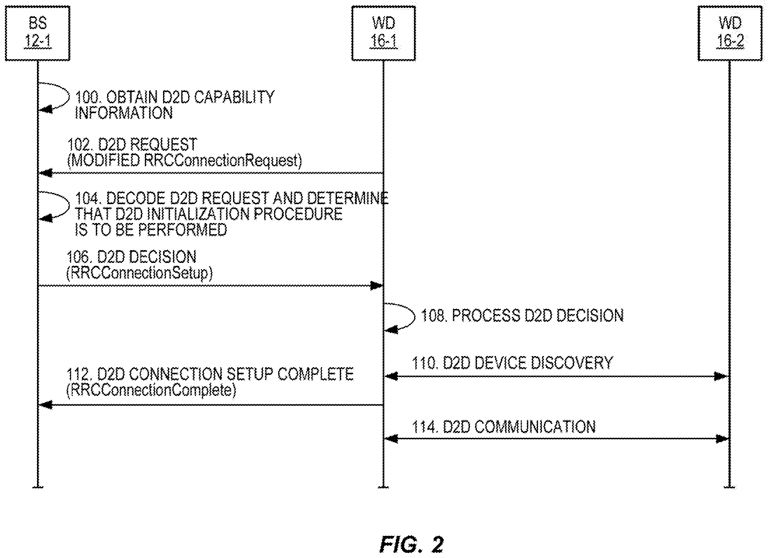

Figure 2 illustrates the operation of the cellular communications network 10 to provide network-assisted device discovery according to one embodiment of the present disclosure. In this particular example, the base station (BS) 12-1 performs a network-assisted device discovery procedure by which the wireless device 16-1 discovers the wireless device 16-2. As illustrated, the base station 12-1 obtains D2D capability information for a number of wireless devices 16 that are physically capable of D2D communication (step 100). The wireless devices 16 that are physically capable of D2D communication include wireless devices 16 located in the cell 14-1 that are physically capable of D2D communication and, in some embodiments, wireless devices 16 located in neighboring cells 14 (e.g., the cell 14-2) that are physically capable of D2D communication. As used herein, a wireless device 16 is "physically capable of D2D communication" if the wireless device 16 includes hardware and, in some embodiments, software that is configured to provide D2D communication with other wireless devices 16 with the assistance of the cellular communications network 10.

For each wireless device 16 that is physically capable of D2D communication (as referred to herein as D2D capable wireless devices 16), the corresponding D2D capability information is generally information that indicates that the wireless device 16 is physically capable of D2D communication (e.g., information that indicates that the wireless device 16 responded affirmatively to an enquiry from the cellular communications network 10). In addition, the D2D capability information can include other information that is to be used by the base station 12-1 in association with the network-assisted device discovery procedure. For instance, in one embodiment, the D2D capability information includes, for each wireless device 16 that is physically capable of D2D communication, information that is indicative of content and/or services available from the D2D capable wireless device 16, a geographic location of the wireless device 16, an operative frequency spectrum of the wireless device 16, and/or an identifier (e.g., Cell Radio Network Temporary Identifier (CRNTI) or System Architecture Evolution Temporary Mobile Subscriber Identity (S-TMSI)) of the wireless device 16.

The base station 12-1 obtains the D2D capability information in any desired manner. As discussed below in detail, in one embodiment, the base station 12-1 obtains the D2D capability information directly from at least some and potentially all of the D2D capable wireless devices 16. In addition or alternatively, the base station 12-1 obtains the D2D capability information for at least some of the D2D capable wireless devices 16 from other nodes in the cellular communications network 10 (e.g., from other base siation(s) 12 during handovers of the corresponding wireless devices 16 to the cell 14-1 served by the base station 12-1).

In response to some triggering event, the wireless device 16-1 transmits a D2D request to the base station 12-1 (step 102). The triggering event may be, for example, an event in an application layer of the wireless device 16-1 (e.g., a request from a user of the wireless device 16-1 that triggers a D2D connection), the wireless device 16-1 moving into a new tracking area within the cellular communications network 10, or the wireless device 16-1 executing a handover to the cell 14-1 served by the base station 12-1. In one embodiment, the D2D request includes information that is indicative of content desired by the wireless device 16-1 for D2D communication (e.g., a particular content item such as a particular video, a particular song, or a particular game or a content type such as videos, music, or gaming) and/or information indicative of a service desired by the wireless device 16-1 for D2D communication (e.g., a particular service such as a particular social networking service or a service type such as social networking). In addition or alternatively, the D2D request may include a geographic location of the wireless device 16-1 (e.g., Global Positioning System (GPS) coordinates).

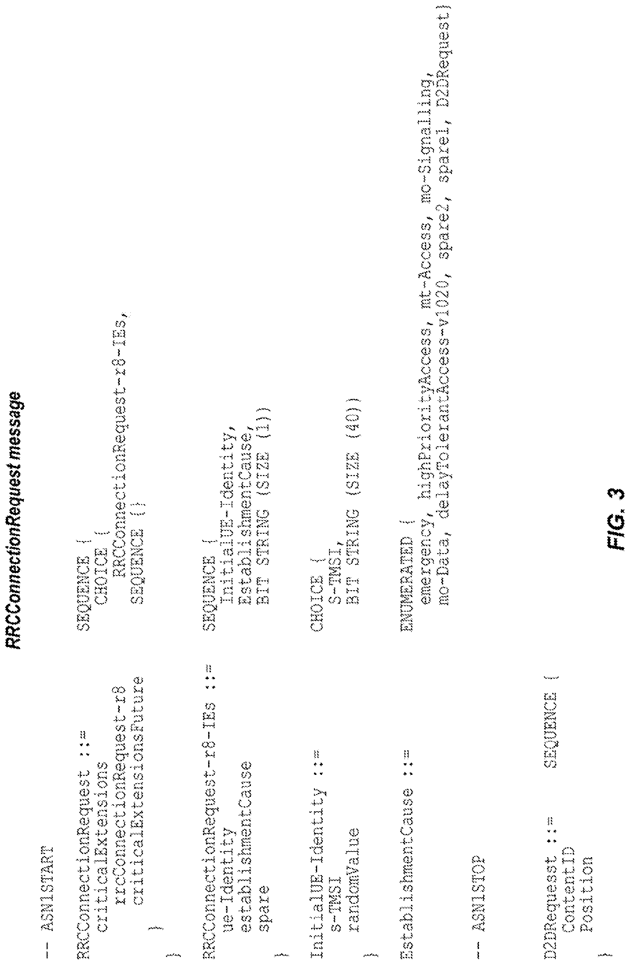

The D2D request is transmitted to the base station 12-1 via signaling within resources (i.e., time and frequency resources) of the cellular communications network 10. In the preferred embodiment illustrated in Figure 2, the D2D request is included in a modified RRCConnectionRequest. The modified RRCConnectionRequest is preferably submitted by Layer 3 at the wireless device 16-1 for transmission and is multiplexed in the first scheduled uplink transmission on the Uplink Shared Channel (UL-SCH) during a random access procedure (i.e., Msg3). One example of the modified RRCConnectionRequest is illustrated in Figure 3. As illustrated, the modified RRCConnectionRequest includes an EstablishmentCause. In order to communicate the D2D request, the EstablishmentCause of the RRCConnectionRequest is set to a value corresponding to a D2D request, which in this embodiment is "D2DRequest." In this embodiment, the D2D request contained in the modified RRCConnectionRequest message includes a content identifier ("ContentID") that is indicative of the content desired for D2D communication as well as a geographic location ("Position") of the wireless device 16-1.

Returning to Figure 2, in response to receiving the D2D request, the base station 12-1 decodes the D2D request and determines that a D2D initialization procedure is to be performed (step 104). The base station 12-1 decodes the D2D request to first determine that the message received is a D2D request and then, if applicable, extract information from the D2D request (e.g., ContentID and position). The base station 12-1 then determines whether to perform the D2D initialization procedure. In other words, the base station 12-1 determines whether any suitable D2D capable wireless device(s) 16 is(are) available for D2D communication with the wireless device 16-1,

More specifically, the base station 12-1 determines whether the D2D initialization procedure is to be performed based on one or more criteria that are necessary or desirable for D2D communication with the wireless device 16-1. The one or more criteria include one or more feasibility criteria that must be satisfied for D2D communication between the D2D capable wireless device 16 and the wireless device 16-1 to be feasible. The one or more feasibility criteria that must be satisfied for D2D communication between the D2D capable wireless device 16 and the wireless device 16-1 to be feasible may include a criteria that the two wireless devices 16 must be within a predefined threshold geographic distance from one another and/or a criteria that the two wireless devices 16 must be within a predefined threshold radio distance from one another. The geographic locations of the two wireless devices 16 may be provided in the corresponding D2D request and D2D capability information or determined by the base station 12-1 using any appropriate location determination technique. The radio distance between the two wireless devices 16 can be determined based on any suitable information (e.g., statistics such as Reference Signal Received Power (RSRP) measured at the wireless device 16 and reported to the cellular communications network 10 for a downlink from the base station 12-1 and, in some embodiments, downlinks from one or more neighboring base stations 12).

In addition to the feasibility criteria, if the D2D request includes information that identifies the content and/or service(s) desired by the wireless device 16-1, the one or more criteria that are necessary or desirable for D2D communication with the wireless device 16-1 may include a criterion that the D2D capable wireless device 16 must share the content and/or service(s) desired by the wireless device 16-1. Thus, for example, if the D2D request indicates that the wireless device 16-1 desires music, then the base station 12-1 determines whether there are any D2D capable wireless devices 16 that: (1) are sufficiently close to the wireless device 16-1 for D2D communication with the wireless device 16-1 to be feasible and (2) share the content and/or service(s) desired by the wireless device 16-1. Another criterion that may be considered by the base station 12-1 is the availability of resources (time and frequency) for a D2D communication link.

In this embodiment, the base station 12-1 determines that the D2D initialization procedure is to be performed and, in doing so, selects the wireless device 16-2 (and potentially one or more additional D2D capable wireless devices 16) as candidates for D2D communication with the wireless device 16-1. As such, the base station 12-1 transmits a positive D2D decision to the wireless device 16-1 (step 106). In this emhodiment, the D2D decision generally includes information that enables the wireless device 16-1 to perform D2D device discovery for each of the D2D capable wireless devices 16 selected by the base station 12-1 as candidates for D2D communication with the wireless device 16-1. More specifically, in one embodiment, the D2D decision includes a list of identifiers (e.g., CRNTIs) of the one or more D2D capable wireless devices 16 selected by the base station 12-1 as candidates for D2D communication with the wireless device 16-1. Further, the one or more D2D capable wireless devices 16 may be prioritized by the base station 12-1 based on, for example, proximity to the wireless device 16-1, where the priorities are indicated in the list of identifiers. For instance, the list of identifiers may be sorted based on the priorities of the corresponding D2D capable devices 16 with respect to D2D communication with the wireless device 16-1. In addition, the D2D decision may include information that is indicative of resources (time and frequency) that are dedicated to D2D discovery and/or the D2D connection between the first wireless device 16-1 and, in this example, the wireless device 16-2. For instance, the D2D decision may include information that identifies:
- Resource Blocks (RBs) in the uplink or downlink band of the cellular communications network 10 that are dedicated for the D2D connection and, in some embodiments, an order in which the RBs are to be activated,
- Physical Uplink Control Channel (PUCCH) resources in which the D2D pair can exchange power control commands, and
- information to be used for D2D device discovery (e.g., Physical Random Access Channel (PRACH) resources to be used for D2D device discovery, security information that allows D2D device discovery, and/or PRACH power settings for D2D device discovery).
Notably, some or all of the information in the D2D decision may also be provided to the wireless device 16-2 (and any other wireless devices 16 selected as candidates for D2D communication with the wireless device 16-1 if needed).

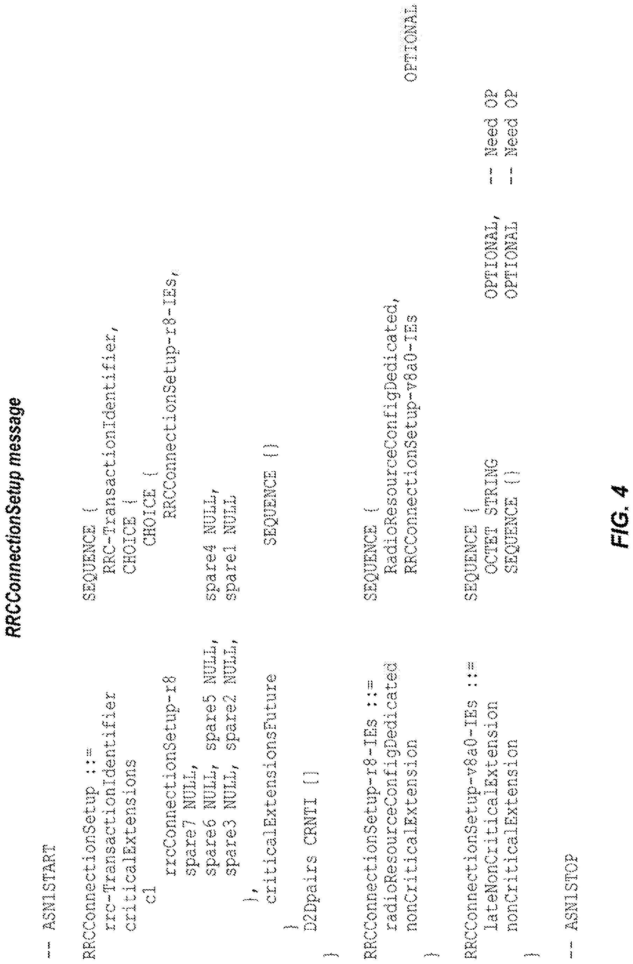

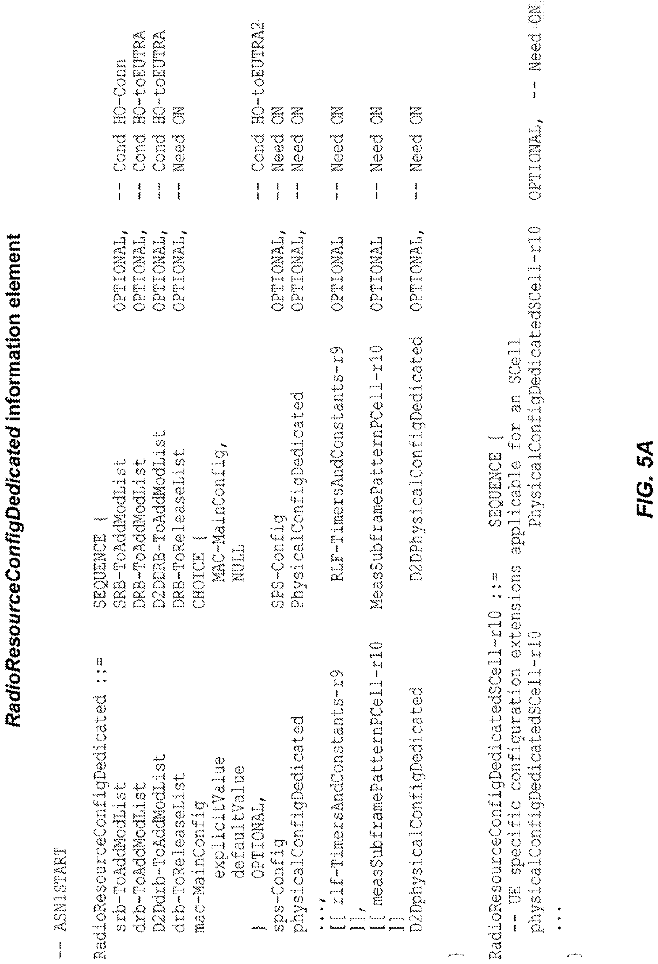

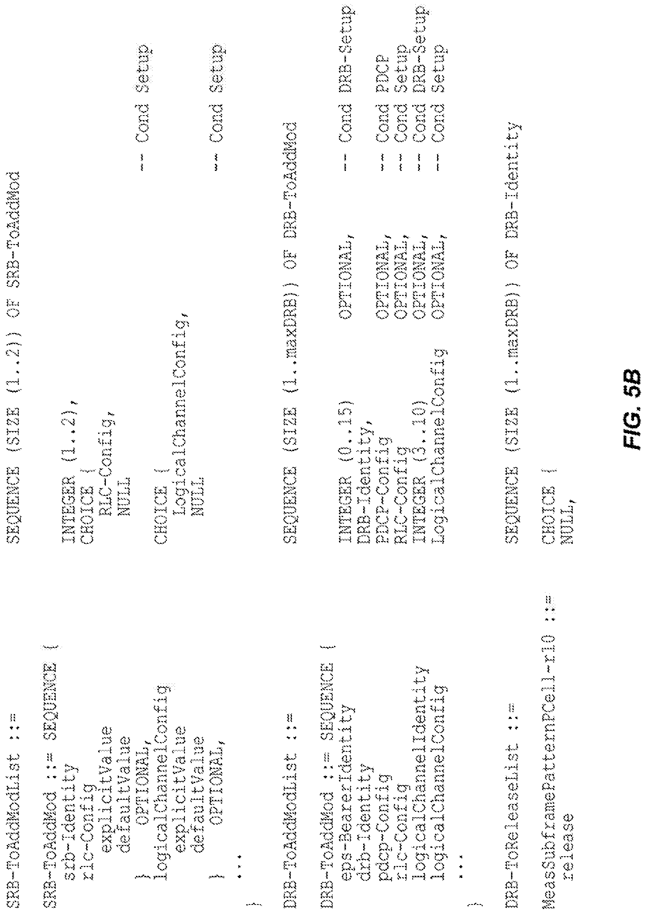

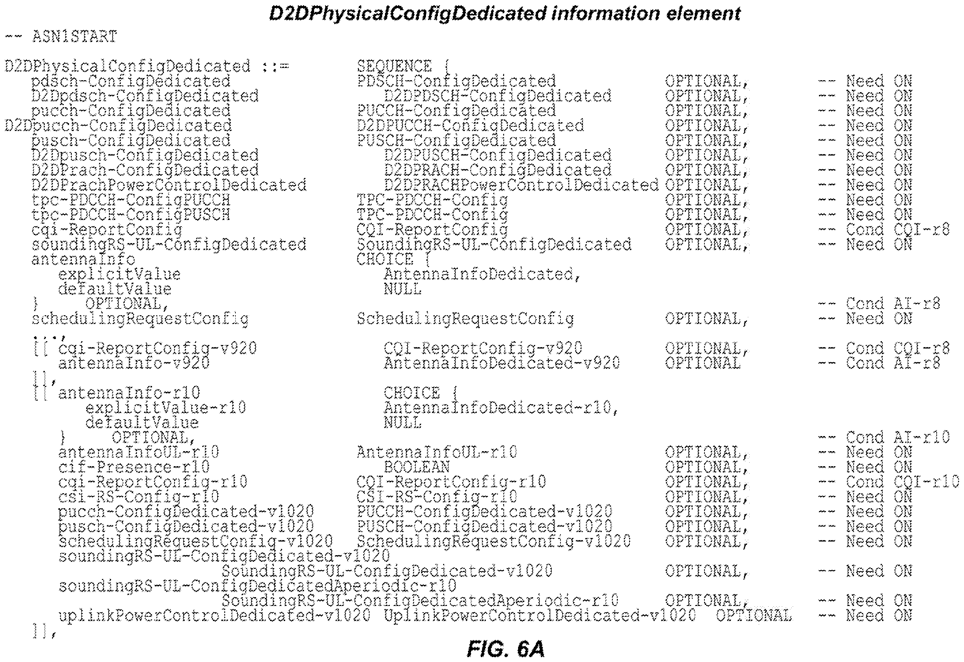

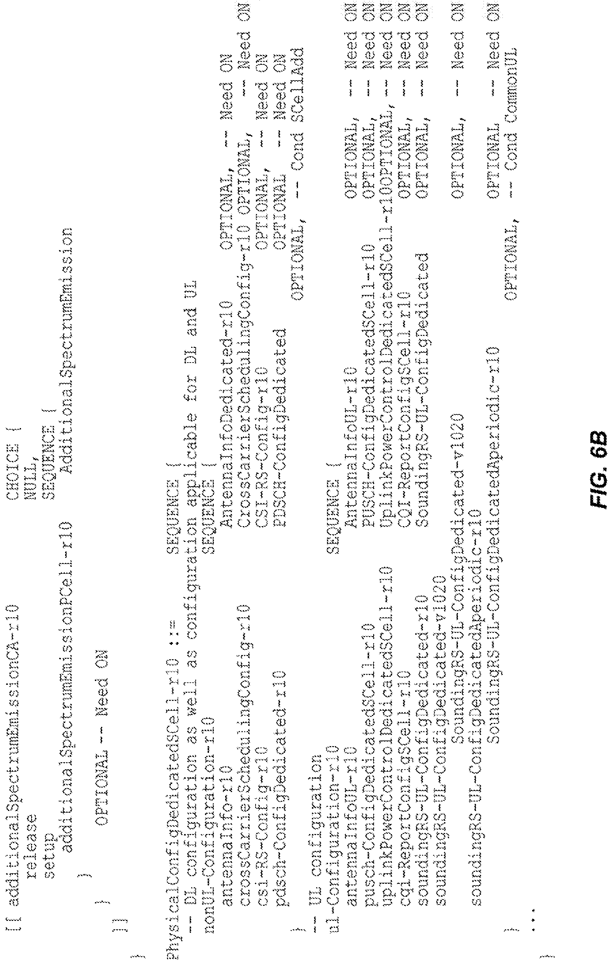

The D2D decision is transmitted from the base station 12-1 to the wireless device 16-1 via signaling within resources (i.e., time and frequency resources) of the cellular communications network 10. In the preferred embodiment illustrated in Figure 2, the D2D decision is included in an RRCConnectionSetup message transmitted from the base station 12-1 to the wireless device 16-1. One example of an RRCConnectionSetup message that includes a D2D decision is illustrated in Figure 4. As illustrated, the RRCConnectionSetup message includes a list of identifiers (CRNTIs) of the wireless devices 16 selected by the base station 12-1 as candidates for D2D communication with the wireless device 16-1. In addition, the RRCConnectionSetup message includes a RadîoResourceConfigDedicated Information Element (IE), as illustrated in Figures 5A and 5B. The RadioResourceConfigDedicated IE includes, among other things, D2Ddrb-ToAddklodList and D2DPhysicalConfigDedicated. D2Ddrb-ToAddModList indicates the D2D data radio bearers (DRBs) towards which the RadioResourceConfigDedicated information element is related. D2D DRB contains the radio configuration for each D2D DRB that is uniquely indexed with a D2D-DRB identity. Each D2D connection may have a different D2D-DRB identity. In principle even the same D2D-capable wireless device 16 may be involved in multiple D2D connections, i.e. multiple D2D bearers. A D2D identity may be used by the eNB to uniquely address a certain D2D DRB, e.g., for granting transmissions and allocating radio resources for that D2D DRB. D2DPhysicalConfigDedicated contains, as illustrated in Figures 6A and 6B, information for the physical setup of the D2D communication link (e.g., the time and frequency resources for the D2D communication link), PUCCH resources in which the D2D pair can exchange power control commands, PRACH resources to be used for D2D device discovery, and the PRACH power setting to use when performing D2D device discovery. D2DPhysicalConfigDedicated is customized for each D2D connection.

Returning to Figure 2, in response to receiving the D2D decision, the wireless device 16-1 processes the D2D decision (step 108). More specifically, the wireless device 16-1 processes the D2D decision to obtain the information included in the D2D decision (e.g., the list of identifiers of the wireless device(s) 16 selected by the base station 12-1, information to be used for D2D device discovery, etc.). In this embodiment, the wireless device 16-1 initiates a D2D device discovery procedure using the information included in the D2D decision (step 110). Notably, if the D2D decision includes a list of two or more wireless devices 16, the wireless device 16-1 selects, in this embodiment, the wireless device 16-2 from the list. If the list is prioritized, the wireless device 16-1 preferably selects the wireless device 16 having the highest priority.

In one embodiment, the wireless device 16-1 initiates the D2D device discovery procedure by transmitting a D2D access request to the wireless device 16-2 using resources dedicated for D2D device discovery for the D2D pair (i.e., the wireless device 16-1 and the wireless device 16-2). In one particular embodiment, the resources dedicated to D2D device discovery for the D2D pair includes dedicated PRACH resources. In addition, the D2D access request may be transmitted at a specified PRACU power setting. Both the PRACH resources and the PRACH power setting may be included in the positive D2D decision. In response, the wireless device 16-2 returns a D2D access acknowledgement. If for some reason the wireless device 16-1 is unable to establish D2D communication with the wireless device 16-2, the wireless device 16-1 may then perform D2D device discovery for another wireless device 16 in the list of wireless devices 16 included in the positive D2D decision (e.g., the wireless device 16 having the next highest priority), if any.

After completing the D2D device discovery procedure, a D2D communication link is established between the wireless devices 16-1 and 16-2. In this embodiment, the wireless device 16-1 sends a D2D connection setup complete message to the base station 12-1 in order to notify the base station 12-1 that the D2D connection has been successfully established (step 112). In the preferred embodiment illustrated in Figure 2, the D2D connection setup complete message is included in an RRCConnectionComptete message. In addition, the wireless devices 16-1 and 16-2 communicate via D2D communication over the established D2D communication link (step 114).

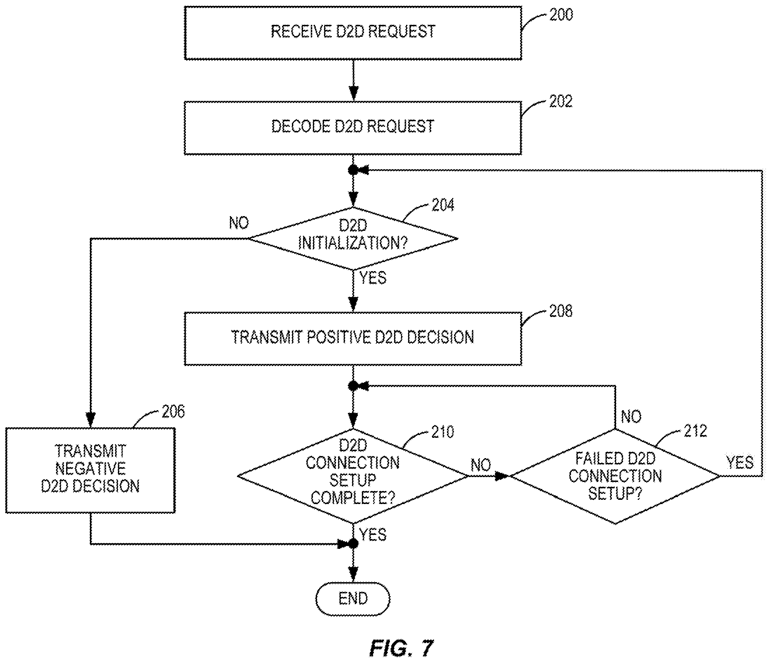

Figure 7 is a flow chart that illustrates the operation of one of the base stations 12 (e.g., the base station 12-1 of Figure 2) to receive and a process a D2D request according to one embodiment of the present disclosure. First, the base station 12 receives a D2D request from one of the wireless devices 16 in the cell 14 served by the base station 12 (step 200). As discussed above, in one embodiment, the D2D request includes information that is indicative of content desired by the wireless device 16 for D2D communication (e.g., a particular content item such as a particular video, a particular song, or a particular game or a content type such as videos, music, or gaming) and/or information indicative of a service desired by wireless device 16 for D2D communication (e.g., a particular service such as a particular social networking service or a service type such as social networking). In addition or alternatively, the D2D request may include a geographic location of wireless device 16 (e.g., GPS coordinates). The D2D request is transmitted by wireless device 16 and received by the base station 12 via signaling within resources (i.e., time and frequency resources) of the cellular communications network 10. As discussed above, in one preferred embodiment, the D2D request is included in a modified RRCConnectionRequest.

In response to receiving the D2D request, the base station 12 decodes the D2D request to first determine that the message is a D2D request and then, if applicable, extract the information from the D2D request (step 202). The base station 12 then determines whether a D2D initialization procedure is to be performed (step 204). In doing so, as discussed above, the base station 12 determines whether there are any suitable D2D capable wireless devices(s) 16 that are available for D2D communication with the wireless device 16 from which the D2D request was received. Thus, the base station 12 determines that the D2D initialization procedure is to be performed if there are one or more D2D capable wireless devices 16 that satisfy one or more criteria for D2D communication with the wireless device 16 from which the D2D request was received. The one or more criteria include a criterion that D2D communication between the D2D capable wireless device 16 and the wireless device 16 from which the D2D request was received be feasible. In addition, the one or more criteria may include one or more criteria regarding content and/or service(s) desired by the wireless device 16 from which the D2D request was received, availability of resources for D2D communication, and/or the like.

If there are no D2D capable wireless devices 16 that satisfy the one or more criteria for D2D communication with the wireless device 16 from which the D2D request was received (or if the base station 12 otherwise determines that the D2D initialization procedure is not to be performed), the base station 12 determines that the D2D initialization procedure is not to be performed. Conversely, if the base station 12 determines that one or more D2D capable wireless devices 16 that satisfy the one or more criteria for D2D communication with the wireless device 16, the base station 12 identifies, or selects, those D2D capable wireless device(s) 16 as candidates for D2D communication with the wireless device 16 and determines that the D2D initialization procedure is to be performed.

If the D2D initialization procedure is not to be performed the base station 12 transmits a negative D2D decision to the wireless device 16 from which the D2D request was received (step 206). The negative D2D decision is transmitted to the wireless device 16 using signaling within the resources of the cellular communications network 10 (e.g., in an appropriate Radio Resource Control (RRC) message such as, for instance, a RRCConnectionReject message in response to the RRCConnectionRequest message containing the D2D request flag). If the D2D initialization procedure is to be performed, the base station 12 transmits a positive D2D decision to the wireless device 16 from which the D2D request was received (step 208). As discussed above, in one embodiment, the D2D decision generally includes information that enables the wireless device 16 to perform D2D device discovery for each of the D2D capable wireless devices 16 selected by the base station 12 as candidates for D2D communication with the wireless device 16. The base station 12 transmits the D2D decision via signaling within resources (i.e., time and frequency resources) of the cellular communications network 10. In one preferred embodiment, the D2D decision is included in an RRCConnectionSetup message transmitted from the base station 12 to the wireless device 16.

After transmitting the positive D2D decision, the base station 12 determines whether the wireless device 16 has returned a D2D connection setup complete message (step 210). If so, the process ends. If not, the base station 12 determines whether the wireless device 16 the D2D connection setup failed (step 212). In one embodiment, if the wireless device 16 is unable to establish a D2D connection with any of the D2D capable wireless devices 16 included in the positive D2D decision, the wireless device 16 transmits a message to the base station 12 that is indicative of a D2D connection setup failure. As discussed below, in one embodiment, this message is included in an RRCConnectionReestablishment Request. If there was a D2D connection setup failure, the process returns to step 204 and is repeated. If there was no D2D connection setup failure, the process returns to step 210 such that the base station 12 continues to wait for either a D2D connection setup complete or a D2D connection setup failure.

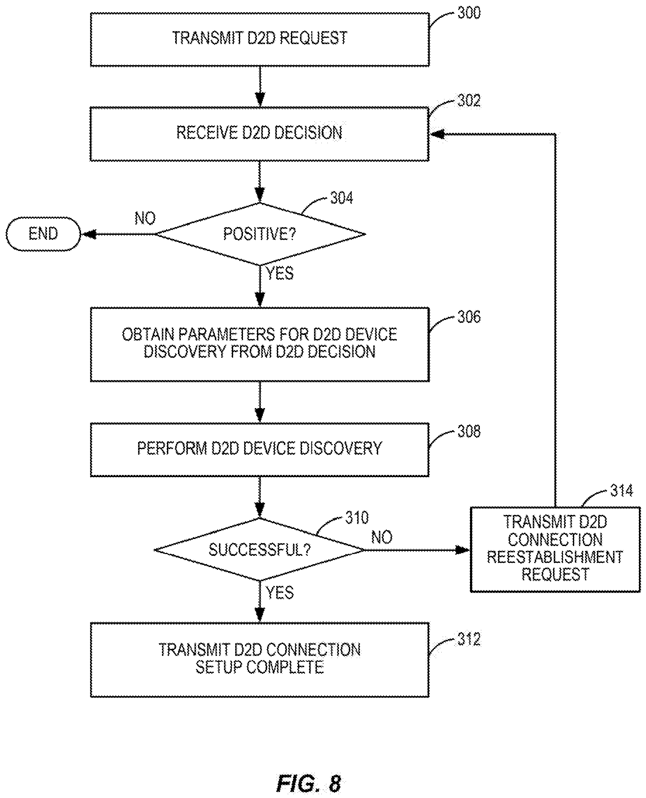

Figure 8 is a flow chart that illustrates the operation of one of the wireless devices 16 of Figure 1 to perform network-assisted D2D device discovery according to one embodiment of the present disclosure. In response to some triggering event, the wireless device 16 transmits a D2D request to the base station 12 that is serving the cell 14 in which the wireless device 16 is located (step 300). As discussed above, the triggering event may be, for example, an event in an application layer of the wireless device 16 (e.g., a request from a user of the wireless device 16 that triggers a D2D connection), the wireless device 16 moving into a new tracking area within the cellular communications network 10, or the wireless device 16 executing a handover to the cell 14 served by the base station 12. In one embodiment, the D2D request includes information that is indicative of content desired by the wireless device 16 for D2D communication and/or information indicative of a service desired by the wireless device 16 for D2D communication. In addition or alternatively, the D2D request may include a geographic location of the wireless device 16 (e.g., GPS coordinates). The wireless device 16 transmits the D2D request to the base station 12 via signaling within resources (i.e., time and frequency resources) of the cellular communications network 10. As discussed above, in one preferred embodiment, the D2D request is included in a modified RRCConnectionRequest.

After transmitting the D2D request, the wireless device 16 receives a D2D decision from the base station 12 (step 302) and determines whether the D2P decision is a positive D2D decision or a negative D2D decision (step 304). If the D2D decision is negative D2D decision, the process ends. However, if the D2D decision is a positive D2D decision, in this embodiment, the wireless device 16 obtains parameters for D2D device discovery from the D2D decision (step 306). For LTE, the parameters for D2D device discovery include PRACH resources to be used for D2D device discovery and, if desired, a PRACH power setting to use when performing D2D device discovery. The parameters for D2D device discovery may also include other parameters such as, for example, a PRACH preamble to be used for D2D device discovery.

Next, the wireless device 16 performs D2D device discovery (step 308). In one embodiment, the wireless device 16-1 initiates the D2D device discovery procedure by transmitting a D2D access request to the appropriate wireless device 16 (e.g., the wireless device 16-2) using resources dedicated for D2D device discovery for the D2D pair. In one particular embodiment, the resources dedicated to D2D device discovery for the D2D pair includes dedicated PRACH resources. In addition, the D2D access request may be transmitted at a specified PRACH power setting. Both the PRACH resources and the PRACH power setting may be included in the positive D2D decision. Note that, in one embodiment, the D2D decision includes a prioritized list of identifiers of the D2D capable wireless device(s) 16 selected by the base station 12 as candidates for D2D communication with the wireless device 16. In this embodiment, the wireless device 16 preferably performs D2D device discovery for the D2D capable wireless devices 16 identified in the D2D decision in an order according to their priorities until either D2D device discovery is successful or D2D device discovery has failed for all of the D2D capable wireless devices 16 identified in the list.

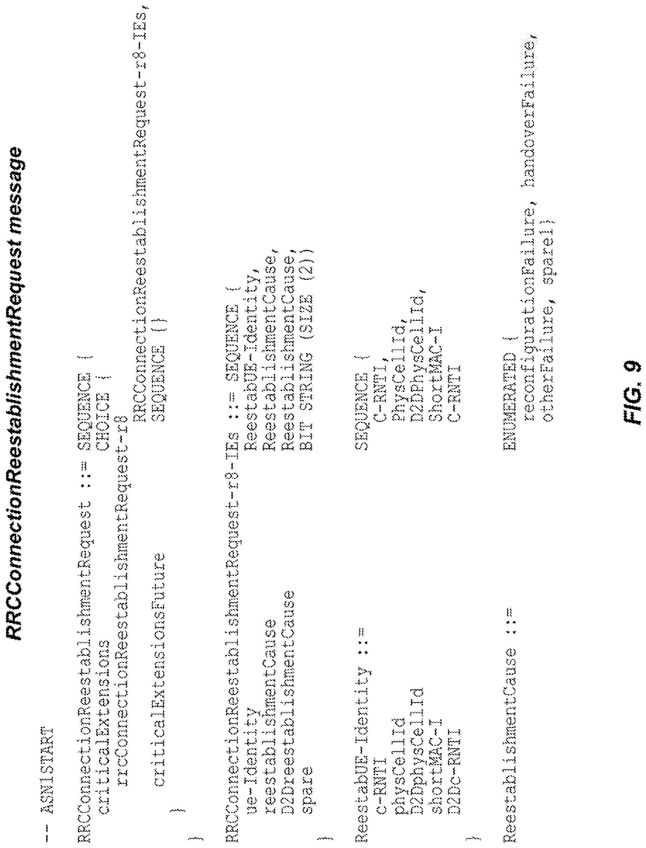

The wireless device 16 then determines whether D2D device discovery was successful (step 310). If so, the wireless device 16 transmits a D2D connection setup complete message to the base station 12 (step 312). In one preferred embodiment, the D2D connection setup complete message is included in an RRCConnectionComplete message. If D2D device discovery was not successful, the wireless device 16 transmits a D2D connection reestablishment request to the base station 12 (step 314) and then the process returns to step 302. In one preferred embodiment, the D2D connection reestablishment request is included in an RRCConneetionReestablishmentRequest message. One example of an RRCConnectionReestablishmentRequest message used to carry the D2D connection reestablishment request is illustrated in Figure 9. As illustrated, the RRCConnectionReestablishmentRequest message includes a D2D ReestablishmentCause, a D2DphysCellID, and a D2Dc-RNTI. The D2D ReestablishmentCause contains the reason for reestablishment, e.g., D2D configuration failure. The D2DphysCellID contains the ID of the cell that was providing the D2D support/assistance before reestablishment. In principle, the D2D cell can be different from the cell in which the wireless device 16 is connected, e.g., in case of inter-cell D2D communication. D2Dc-RNTI is the RNTI of the D2D connection before reestablishment. Note that a wireless device 16 may have multiple D2D bearers/communication active and not all of them may be affected by the reestablishment procedure.

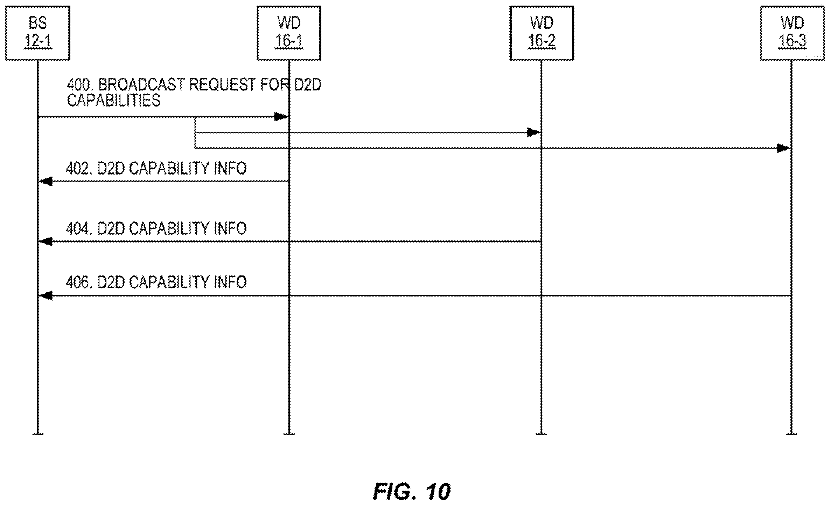

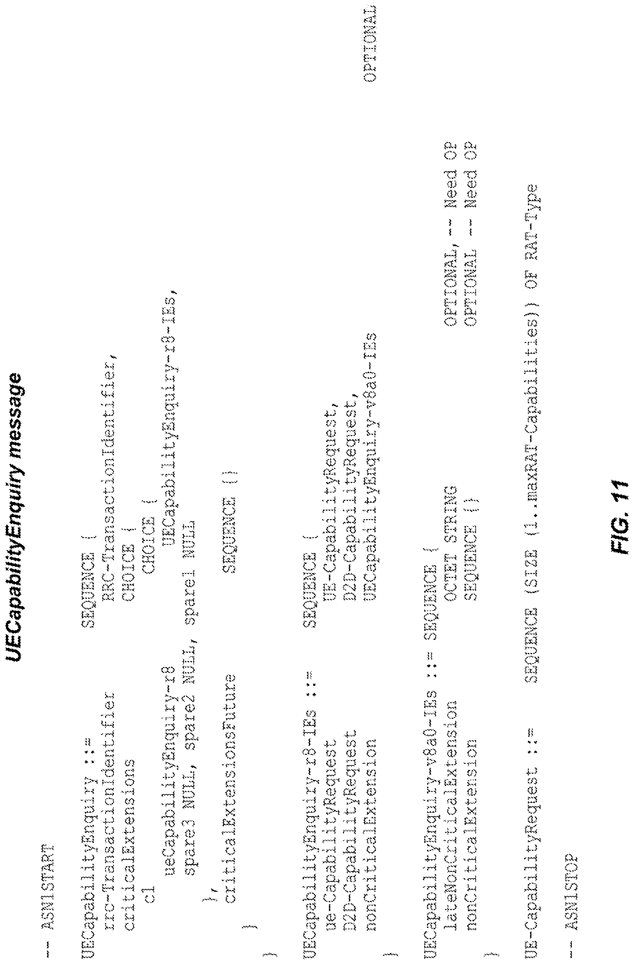

Figure 10 illustrates the operation of one of the base stations 12, which in this example is the base station 12-1, to obtain D2D capability information from the wireless devices 16 in the cell 14 served by the base station 12 according to one embodiment of the present disclosure. This process may be desirable where, for example, the base station 12-1 is not otherwise aware of the D2D capabilities of the wireless devices 16 located in the cell 14-1. As illustrated, the base station 12-1 broadcasts a request for D2D capabilities (step 400). In one embodiment the request for D2D capabilities is included in a User Element (UE) CapabilityEnquiry message such as that illustrated in Figure 11. As illustrated, the UBCapabilityEnquiry message includes a D2D CapabilityRequest.

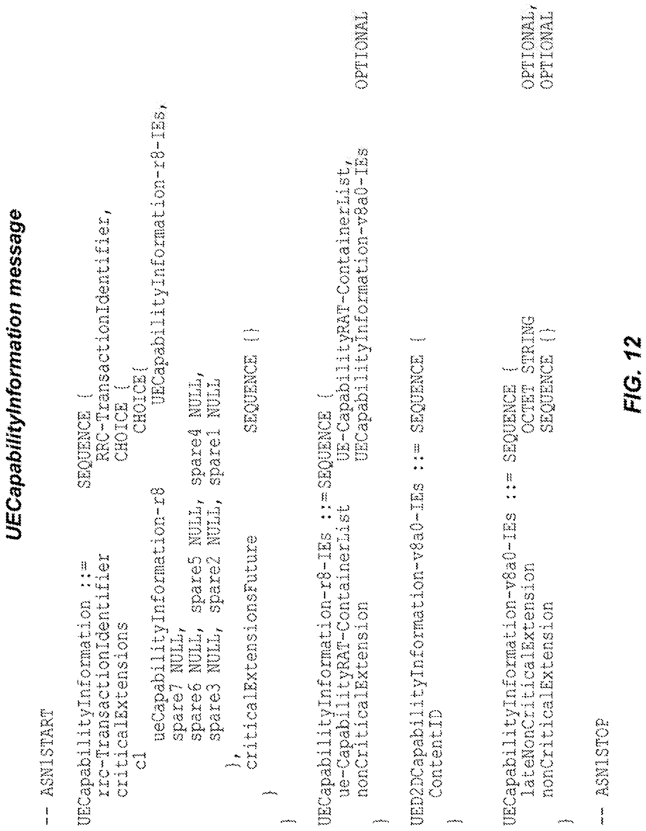

In response, the wireless devices 16 in the cell 14 served by the base station 12 that are physically capable of D2D communication, which in this example include the wireless devices 16-1, 16-2, and 16-3, return corresponding D2D capability information to the base station 12-1 (steps 402, 404, 406). In one embodiment, the wireless devices 16-1, 16-2, and 16-3 transmit their D2D capability information in corresponding UECapabilityInformation messages. One example of a UECapabilityInformation message is illustrated in Figure 12. As illustrated, in the example of Figure 12, the D2D capability information includes a content identifier (ContentID) that identifies content available from the corresponding wireless device 16 via D2D communication.

In addition or as an alternative to storing the D2D capability information of the wireless devices 16-1, 16-2, and 16-3 at the base station 12-1, the D2D capability information may be registered at another node in the cellular communications network 10 (e.g., a Mobile Management Entity (MME)) and transferred to other base stations 12 at tracking area changes. Moreover, such information may be used by the base station 12-1 to page the wireless devices 16-1, 16-2, and 16-3 when the wireless devices 16-1, 16-2, and 16-3 are in idle mode. Paging may be performed, for instance, according to some dedicated wireless device identifier or content/service identifier.

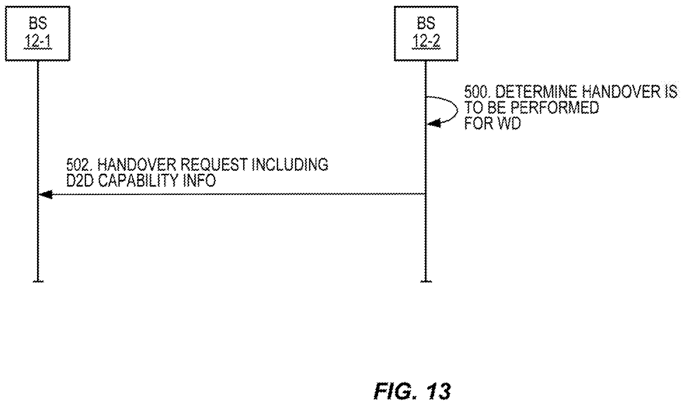

While Figures 10 through 12 relate to the operation of the base station 12 to request and receive D2D capability information from the wireless devices 16 within the cell 14 of the base station 12, Figures 13 through 15 relate to sending D2D capability information between base stations 12. In particular, Figure 13 illustrates the operation of the base station 12-2 to provide D2D capability information for one of the wireless devices 16 to the base station 12-1 in association with a handover of the wireless device 16 from the cell 14-2 served by the base station 12-2 to the cell 14-1 served by the base station 12-1 according to one embodiment of the present disclosure. As illustrated, the base station 12-2 determines that a handover is to be performed for the wireless device 16 (step 500). The base station 12-2 determines that a handover is to be performed using any suitable technique. In response, the base station 12-2 sends D2D capability information for the wireless device 16 (which the base station 12-2 previously obtained from, for example, the wireless device 16 or another base station 12) to the base station 12-1 (step 502). In one embodiment, the base station 12-2 sends the D2D capability information of the wireless device 16 in a handover request message exchanged via an X2 or S1 interface of the base station 12-2 (or any suitable logical interface).

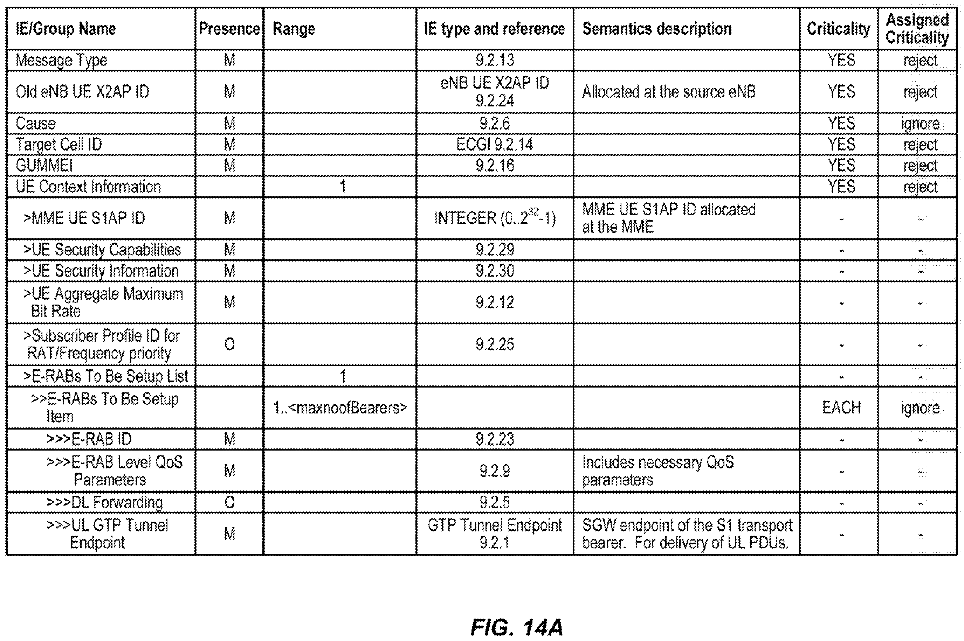

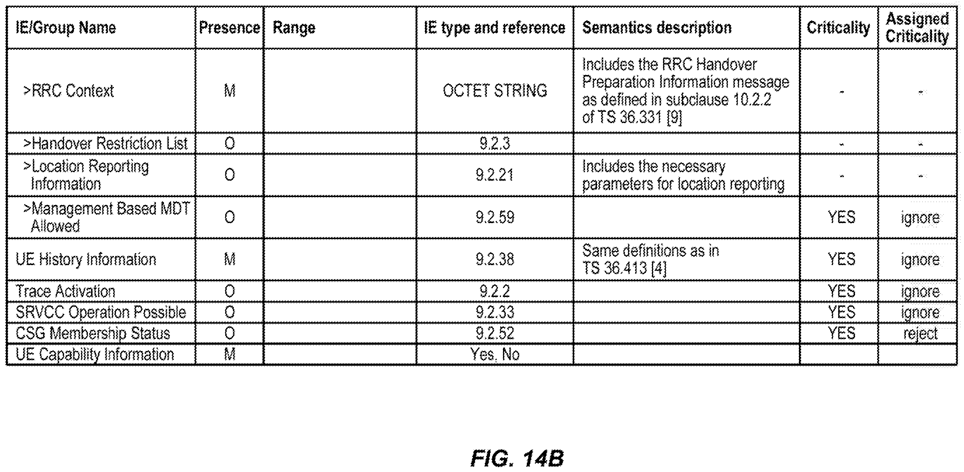

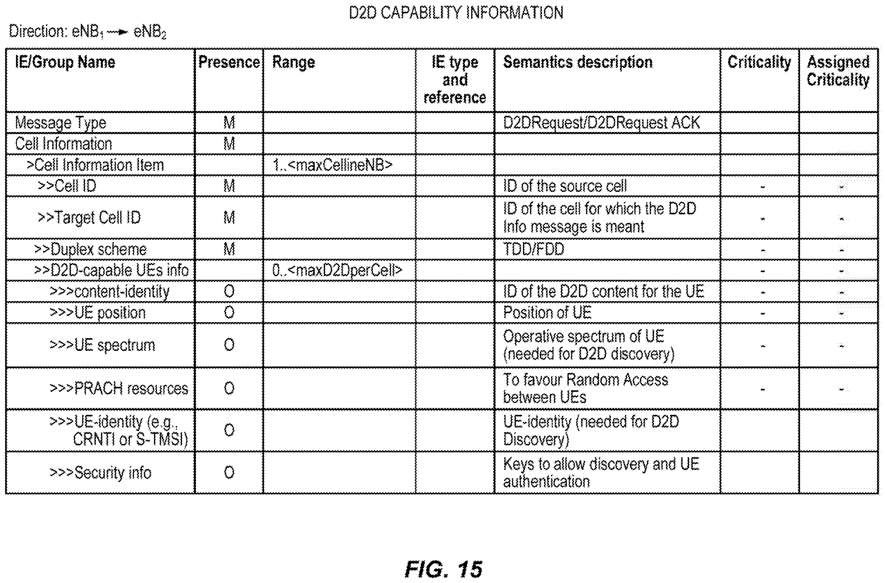

In general, the LTE specifications define a handover request message in 3GPP Technical Specification (TS) 36.423 v. 11.0.0. Figures 14A and 14B illustrate one example of the handover request message of Figure 13 that includes D2D capability information for the wireless device 16 that is being handed over. More specifically, the handover request message of Figures 14A and 14B includes D2D capability information (UE Capability Information). Figure 15 illustrates the D2D capability information of the handover request message of Figures 14A and 14B in detail. As illustrated, the D2D capability information of Figure 15 includes a content ID (content-identity) of content that is shared by the wireless device 16 via D2D communication, a position (UE position) of the wireless device 16, an operative spectrum of the wireless device 16 (UE spectrum) which is needed for D2D discovery, PRACH resources for D2D device discovery, an identifier of the wireless device 16 (UE-identity) which may be, for example, CRNTI or S-TMSI, and security information (e.g., keys to allow discovery and wireless device/UE authentication).

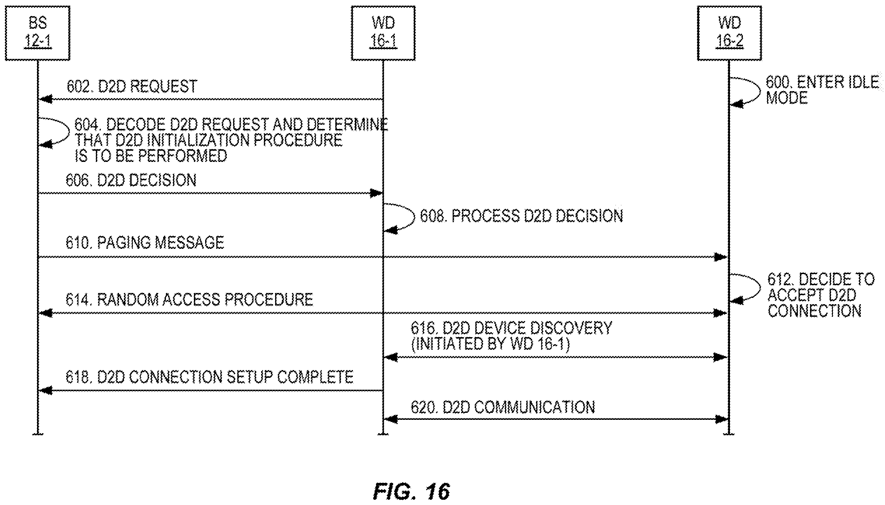

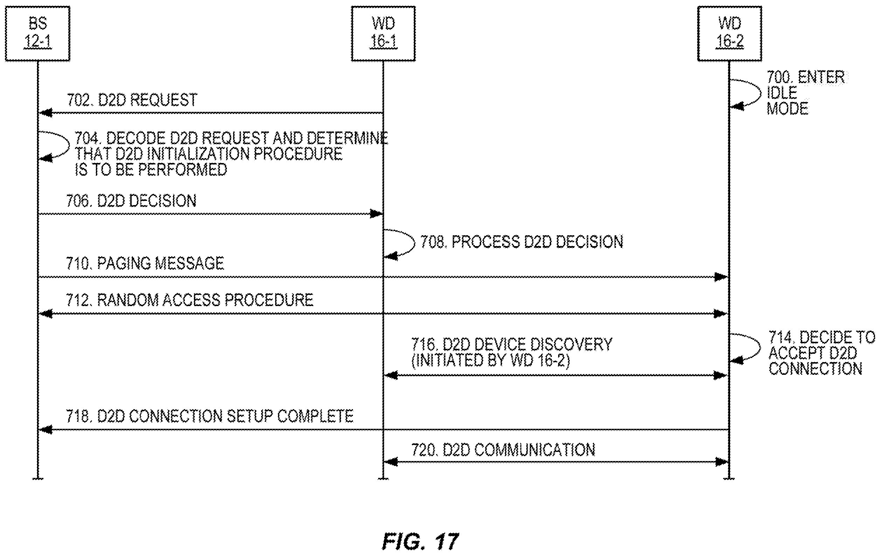

Figures 16 and 17 illustrate embodiments where the wireless device 16-2 selected for D2D communication with the wireless device 16-1 is paged before the D2D device discovery process is performed according to embodiments of the present disclosure. More specifically, Figure 16 illustrates an embodiment where the wireless device 16-2 is paged and the D2D device discovery procedure is initiated by the wireless device 16-1. As illustrated, at some point, the wireless device 16-2 enters an idle mode (step 600). As discussed above with respect to steps 200-206 of Figure 7, the wireless device 16-1 transmits a D2D request to the base station 12-1 (step 602), the base station 12-1 decodes the D2D request and determines that the D2D initialization procedure is to be performed (step 604), the base station 12-1 transmits a positive D2D decision to the wireless device 16-1 (step 606), and the wireless device 16-1 processes the D2D decision (step 608). In addition, in this embodiment, the base station 12-1 transmits a paging message to the wireless device 16-2, which is a D2D capable wireless device 16 selected by the base station 12-1 as a candidate for D2D communication with the wireless device 16-1 in the manner described above (step 610). The paging message preferably includes an identifier of the wireless device 16-1 or a service/content identifier of a content/service desired by the wireless device 16-1.

In response to the paging message, the wireless device 16-2 decides to accept a D2D connection (step 612). This decision may be based on any suitable criteria such as, for example, whether the application layer has configured the wireless device 16-2 to accept D2D connections, a battery life of the wireless device 16-2, or the like. Since the wireless device 16-2 has decided to accept the D2D connection, the wireless device 16-2 initiates a random access procedure by which the wireless device 16-2 transitions from the idle mode to a connected mode (step 614). Thereafter, the wireless device 16-1 initiates a D2D device discovery procedure by which the wireless device 16-1 discovers the wireless device 16-2 and a D2D communication link between the wireless devices 16-1 and 16-2 is established, as discussed above (step 616). The wireless device 16-1 then transmits a D2D connection setup complete message to the base station 12-1 (step 618), and the wireless devices 16-1 and 16-2 perform D2D communication over the established D2D communication link (step 620).

The embodiment of Figure 17 is substantially the same as that of Figure 16 but where D2D device discovery is initiated by the wireless device 16-2 rather than the wireless device 16-1. More specifically, at some point, the wireless device 16-2 enters an idle mode (step 700). As discussed above with respect to steps 200-206 of Figure 7, the wireless device 16-1 transmits a D2D request to the base station 12-1 (step 702), the base station 12-1 decodes the D2D request and determines that the D2D initialization procedure is to be performed (step 704), the base station 12-1 transmits a positive D2D decision to the wireless device 16-1 (step 706), and the wireless device 16-1 processes the D2D decision (step 708). Note that since the D2D device discovery process is to be initiated by the wireless device 16-2 rather than the wireless device 16-1, the positive D2D decision transmitted to the wireless device 16-1 may not include some information included in the positive D2D decision of Figure 2 (e.g., some of the information related to D2D discovery such as, for example, PRACH related information, may not be needed since, in this embodiment, the wireless device 16-2 performs discovery).

In addition, in this embodiment, the base station 12-1 transmits a paging message to the wireless device 16-2, which is a D2D capable wireless device 16 selected by the base station 12-1 as a candidate for D2D communication with the wireless device 16-1 in the manner described above (step 710). The paging message preferably includes an identifier of the wireless device 16-1 or a service/content identifier of a content/service desired by the wireless device 16-1. In response to the paging message, the wireless device 16-2 initiates a random access procedure to connect to the base station 12-1 and thereby transition from the idle mode to the connected mode (step 712) and decides to accept a D2D connection (step 714). This decision may be based on any suitable criteria such as, for example, whether the application layer has configured the wireless device 16-2 to accept D2D connections, a battery life of the wireless device 16-2, or the like. Thereafter, the wireless device 16-2 initiates a D2D device discovery procedure by which the wireless device 16-2 discovers the wireless device 16-1 and a D2D communication link between the wireless devices 16-1 and 16-2 is established, as discussed above (step 716). The wireless device 16-2 (or alternatively the wireless device 16-1) then transmits a D2D connection setup complete message to the base station 12-1 (step 718), and the wireless devices 16-1 and 16-2 perform D2D communication over the established D2D communication link (step 720).

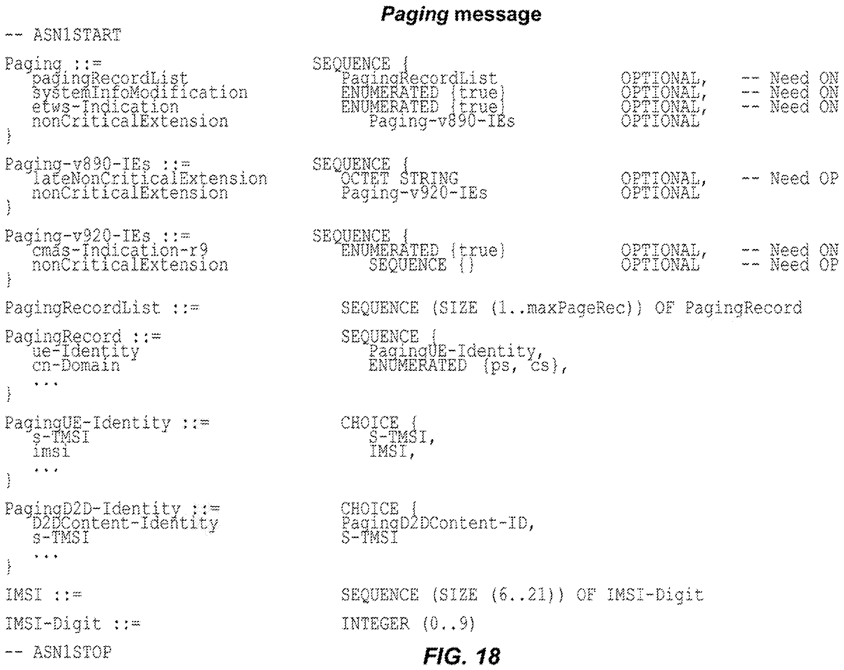

Figure 18 illustrates one example of the paging message of Figures 16 and 17 according to one embodiment of the present disclosure. As illustrated, the paging message includes a PagingD2D-Identity, which can be either a D2D content ID (D2DContent-Identity) of the content shared by the wireless device 16 being paged or an identifier of the wireless device 16 being paged, which in this example is an S-TMSI of the wireless device 16 being paged.

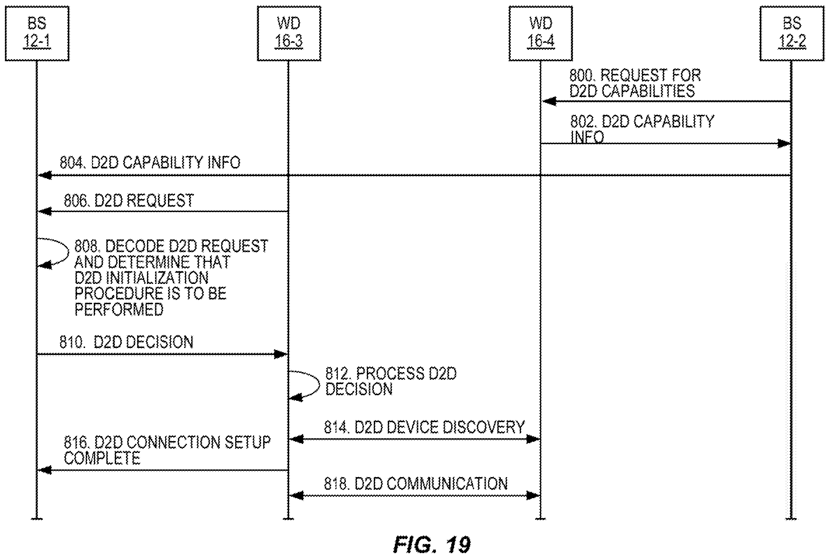

Figure 19 illustrates the operation of the cellular communications network 10 of Figure 1 to enable D2D communication between the wireless devices 16-3 and 16-4 located in neighboring cells 14-1 and 14-2 according to one embodiment of the present disclosure. As illustrated, the base station 12-2 obtains D2D capability information for the wireless device 16-4 by, in this example, requesting and receiving the D2D capability information from the wireless device 16-4 (steps 800 and 802). As discussed above, the request may be an enquiry for D2D capability information broadcast by the base station 12-2. Note that the D2D capability information of the wireless device 16-4 may alternatively be obtained from another node in the cellular communications network 10 (e.g., another base station 12). The base station 12-2 sends the D2D capability information for the wireless device 16-4 (and potentially D2D capability information for other wireless devices 16 in the cell 14-2 served by the base station 12-2) to the base station 12-1 (step 804). The base station 12-2 may send the D2D capability information via, for example, an X2 or S1 interface of the base station 12-1. While not illustrated, the base station 12-1 may, in the same manner, send D2D capability information for wireless devices 16 in the cell 14-1 to the base station 12-2. In addition to the D2D capability information for the wireless device 16-4, the base station 12-1 may obtain D2D capability information for other wireless devices 16 that are physically capable of D2D communication in the manner described above.

In response to some triggering event, the wireless device 16-3 transmits a D2D request to the base station 12-1 (step 806). The triggering event may be, for example, an event in an application layer of the wireless device 16-3 (e.g., a request from a user of the wireless device 16-1 that triggers a D2D connection), the wireless device 16-3 moving into a new tracking area within the cellular communications network 10, or the wireless device 16-3 executing a handover to the cell 14-1 served by the base station 12-1. In one embodiment, the D2D request includes information that is indicative of content desired by the wireless device 16-3 for D2D communication and/or information indicative of a service desired by the wireless device 16-3 for D2D communication. In addition or alternatively, the D2D request may include a geographic location of the wireless device 16-3 (e.g., GPS coordinates). As discussed above, the D2D request is transmitted to the base station 12-1 via signaling within resources (i.e., time and frequency resources) of the cellular communications network 10. In one preferred embodiment the D2D request is included in a modified RRCConnectionRequest.

In response to receiving the D2D request, the base station 12-1 decodes the D2D request and determines that a D2D initialization procedure is to be performed (step 808). The base station 12-1 decodes the D2D request to first determine that the message received is a D2D request and then, if applicable, extract information from the D2D request (e.g., ContentID and Position). The base station 12-1 then determines whether to perform the D2D initialization procedure. In other words, the base station 12-1 determines whether any suitable D2D capable wireless device(s) 16 is(are) available for D2D communication with the wireless device 16-3.

More specifically, as discussed above, the base station 12-1 determines whether the D2D initialization procedure is to be performed based on one or more criteria that are necessary or desirable for D2D communication with the wireless device 16-3. The one or more criteria include one or more feasibility criteria that must be satisfied for D2D communication between the D2D capable wireless device 16 and the wireless device 16-3 to be feasible. The one or more feasibility criteria that must be satisfied for D2D communication between the D2D capable wireless device 16 and the wireless device 16-3 to be feasible may include a criterion that that two wireless devices 16 must be within a predefined threshold geographic distance from one another and/or a criterion that the two wireless devices 16 must be within a predefined threshold radio distance from one another. The geographic locations of the two wireless devices 16 may be provided in the corresponding D2D request and D2D capability information or determined by the base station 12-1 using any appropriate location determination technique. The radio distance between the two wireless devices 16 can be determined based any suitable information (e.g., statistics such as RSRP measured at the wireless device 16 and reported to the cellular communications network 10 for a downlink from the base station 12-1 and, in some embodiments, downlinks from one or more neighboring base stations 12).

In addition to the feasibility criteria, if the D2D request includes information that identifies the content and/or service(s) desired by the wireless device 16-3, the one or more criteria that are necessary or desirable for D2D communication with the wireless device 16-3 may include a criterion that the D2D capable wireless device 16 must share the content and/or service(s) desired by the wireless device 16-3. Thus, for example, if the D2D request indicates that the wireless device 16-3 desires music, then the base station 12-1 determines whether there are any D2D wireless devices 16 that: (1) are sufficiently close to the wireless device 16-3 for D2D communication with the wireless device 16-3 to be feasible and (2) share the content and/or service(s) desired by the wireless device 16-3. Another criterion that may be considered by the base station 12-1 is the availability of resources (time and frequency) for D2D communication link.

In this embodiment, the base station 12-1 determines that the D2D initialization procedure is to be performed and, in doing so, selects the wireless device 16-4 (and potentially one or more additional D2D capable wireless devices 16) as candidates for D2D communication with the wireless device 16-3, As such, the base station 12-1 transmits a positive D2D decision to the wireless device 16-3 (step 810). In this embodiment, the D2D decision generally includes information that enables the wireless device 16-3 to perform D2D device discovery for each of the D2D capable wireless devices 16 selected by the base station 12-1 as candidates for D2D communication with the wireless device 16-3. More specifically, in one embodiment, the D2D decision includes a list of identifiers (e.g., CRNTIs) of the one or more D2D capable wireless devices 16 selected by the base station 12-1 as candidates for D2D communication with the wireless device 16-3. Further, the one or more D2D capable wireless devices 16 may be prioritized by the base station 12-1 based on, for example, proximity to the wireless device 16-3, where the priorities are indicated in the list of identifiers. For instance, the list of identifiers may be sorted based on the priorities of the corresponding D2D capable wireless devices 16 with respect to D2D communication with the wireless device 16-3. In addition, the D2D decision may include information that is indicative of resources (time and frequency) that are dedicated to D2D discovery and/or the D2D connection between the wireless device 16-3 and, in this example, the wireless device 16-4. For instance, the D2D decision may include information that identifies:
- RBs in the uplink or downlink band of the cellular communications network 10 that are dedicated for the D2D connection and, in some embodiments, an order in which the RBs are to be activated,
- PUCCH resources in which the D2D pair can exchange power control commands,
- PRACH resources to be used for D2D device discovery, and
- PRACH power setting to use when performing D2D device discovery.
Notably, some information in the D2D decision may also be provided to the wireless device 16-4 (and any other wireless devices 16 selected as candidates for D2D communication with the wireless device 16-3 if needed). The D2D decision is transmitted from the base station 12-1 to the wireless device 16-3 via signaling within resources (i.e., time and frequency resources) of the cellular communications network 10. In one preferred embodiment, the D2D decision is included in an RRCConnectionSetup message transmitted from the base station 12-1 to the wireless device 16-3,

In response to receiving the D2D decision, the wireless device 16-3 processes the D2D decision (step 812). More specifically, the wireless device 16-3 processes the D2D decision to obtain the information included in the D2D decision (e.g., the list of identifiers of the wireless device(s) 16 selected by the base station 12-1 and the resources dedicated for D2D device discovery and the D2D communication link). In this embodiment, the wireless device 16-3 initiates a D2D device discovery procedure using the information included in the D2D decision (step 814). Notably, if the D2D decision includes a list of two or more wireless devices 16, the wireless device 16-3 selects, in this embodiment, the wireless device 16-4 from the list. If the list is prioritized, the wireless device 16-3 preferably selects the wireless device 16 having the highest priority.

In one embodiment, the wireless device 16-3 initiates the D2D device discovery procedure by transmitting a D2D access request to the wireless device 16-4 using resources dedicated for D2D device discovery for the D2D pair (i.e., the wireless device 16-3 and the wireless device 16-4). In one particular embodiment, the resources dedicated to D2D device discovery for the D2D pair includes dedicated PRACH resources. In addition, the D2D access request may be transmitted at a specified PRACH power setting. Both the PRACH resources and the PRACH power setting may be included in the positive D2D decision. In response, the wireless device 16-4 returns a D2D access acknowledgement. If for some reason the wireless device 16-3 is unable to establish D2D communication with the wireless device 16-3, the wireless device 16-3 may then perform D2D device discovery for another wireless device 16 in the list of wireless devices 16 included in the positive D2D decision (e.g., the wireless device 16 having the next highest priority).

After completing the D2D device discovery procedure, a D2D communication link is established between the wireless devices 16-3 and 16-4. In this embodiment, the wireless device 16-3 sends a D2D connection setup complete message to the base station 12-1 in order to notify the base station 12-1 that the D2D connection has been successfully established (step 816). In one preferred embodiment, the D2D connection setup complete message is included in an RRCConnectionComplete message. In addition, the wireless devices 16-3 and 16-4 communicate via D2D communication over the established D2D communication link (step 818).

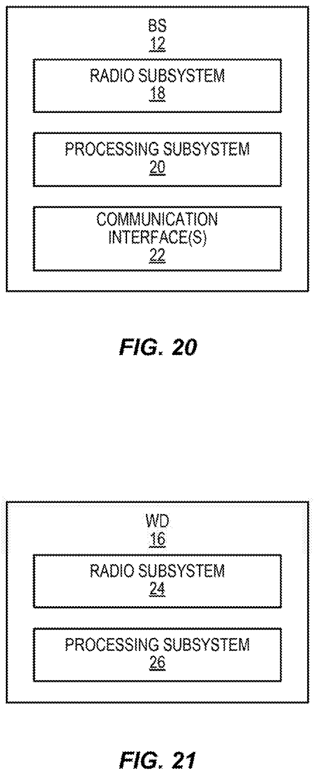

Figure 20 is a block diagram of one of the base stations 12 of Figure 1 according to one embodiment of the present disclosure. As illustrated, the base station 12 includes a radio subsystem 18 and a processing subsystem 20. The radio subsystem 18 generally includes analog and, in some embodiments, digital components for sending and receiving data to and from wireless devices 16 within the corresponding cell 14. In particular embodiments, the radio subsystem 18 may represent or include one or more Radio Frequency (RF) transceiver(s), or separate RF transmitter(s) and receiver(s), capable of transmitting suitable information wirelessly to and receiving suitable information from other network components or nodes. From a wireless communications protocol view, the radio subsystem 18 implements at least part of Layer 1 (i.e., the Physical or "PHY" Layer).

The processing subsystem 20 generally implements any remaining portion of Layer 1 not implemented in the radio subsystem 18 as well as functions for higher layers in the wireless communications protocol (e.g., Layer 2 (data link layer), Layer 3 (network layer), etc.). In particular embodiments, the processing subsystem 20 may comprise, for example, one or several general-purpose or special-purpose microprocessors or other microcontrollers programmed with suitable software and/or firmware to carry out some or all of the functionality of the base station 12 described herein. In addition or alternatively, the processing subsystem 20 may comprise various digital hardware blocks (e.g., one or more Application Specific Integrated Circuits (ASICs), one or more off-the-shelf digital and analog hardware components, or a combination thereof) configured to carry out some or all of the functionality of the base station 12 described herein. Additionally, in particular embodiments, the above described functionality of the base station 12 may be implemented, in whole or in part, by the processing subsystem 20 executing software or other instructions stored on a non-transitory computer-readable medium, such as Random Access Memory (RAM), Read Only Memory (ROM), a magnetic storage device, an optical storage device, or any other suitable type of data storage components.

Lastly, the base station 12 includes one or more communication interfaces 22. The one or more communication interfaces 22 include, for example, a communication interface to one or more components in a core network and/or a communication interface to one or more other base stations 12.

Figure 21 is a block diagram of one of the wireless devices 16 of Figure 1 according to one embodiment of the present disclosure. As illustrated, the wireless device 16 includes a radio subsystem 24 and a processing subsystem 26. The radio subsystem 24 generally includes analog and, in some embodiments, digital components for sending and receiving data to and from the base stations 12. In particular embodiments, the radio subsystem 24 may represent or include one or more RF transceivers, or separate RF transmitter(s) and receiver(s), capable of transmitting suitable information wirelessly to and receiving suitable information from other network components or nodes. From a wireless communications protocol view, the radio subsystem 24 implements at least part of Layer 1 (i.e., the Physical or "'PHY" Layer).

The processing subsystem 26 generally implements any remaining portion of Layer 1 as well as functions for higher layers in the wireless communications protocol (e.g., Layer 2 (data link layer), Layer 3 (network layer), etc.). In particular embodiments, the processing subsystem 26 may comprise, for example, one or several general-purpose or special-purpose microprocessors or other microcontrollers programmed with suitable software and/or firmware to carry out some or all of the functionality of the wireless device 16 described herein. In addition or alternatively, the processing subsystem 26 may comprise various digital hardware blocks (e.g., one or more ASICs, one or more off-the-shelf digital and analog hardware components, or a combination thereof) configured to carry out some or all of the functionality of the wireless device 16 described herein. Additionally, in particular embodiments, the above described functionality of the wireless device 16 may be implemented, in whole or in part, by the processing subsystem 26 executing software or other instructions stored on a non-transitory computer-readable medium, such as RAM, ROM, a magnetic storage device, an optical storage device, or any other suitable type of data storage components. Of course, the detailed operation for each of the functional protocol layers, and thus the radio subsystem 24 and the processing subsystem 26, will vary depending on both the particular implementation as well as the standard or standards supported by the wireless device 16.

The systems and methods for network-assisted device discovery for D2D communication disclosed herein provide many advantages. While not limited to or by any particular advantage, some examples of advantages that may be provided by the systems and methods disclosed herein are: alleviating the need device discovery at the wireless devices from a computational perspective, enabling the performance of security procedures, and providing an interference controlled environment for high data rate applications.

The following acronyms are used throughout this disclosure.

| | | |
|---|---|---|
| • | 3GPP | 3^{rd} Generation Partnership Project |
| • | ASIC | Application Specific Integrated Circuit |
| • | BS | Base Station |
| • | CRNTI | Cell Radio Network Temporary Identifier |
| • | D2D | Device-to-Device |
| • | DRX | Discontinuous Reception |
| • | eNB | Enhanced Node B |
| • | GPS | Global Positioning System |
| • | HARQ | Hybrid Automatic Repeat Request |
| • | IE | Information Element |
| • | LTE | Long Term Evolution |
| • | MME | Mobile Management Entity |
| • | OFDM | Orthogonal Frequency Division Multiplexing |
| • | PRACH | Physical Random Access Channel |
| • | PRB | Physical Resource Block |
| • | PUCCH | Physical Uplink Control Channel |
| • | RAM | Random Access Memory |
| • | RAN | Radio Access Network |
| • | RB | Resource Block |
| • | RF | Radio Frequency |
| • | ROM | Read Only Memory |
| • | RRC | Radio Resource Control |
| • | RRM | Radio Resource Management |
| • | RSRP | Reference Signal Received Power |
| • | S-TMSI | System Architecture Evolution Temporary Mobile Subscriber Identity |
| • | TS Technical | Specification |
| • | UE | User Element |
| • | UL-SCH | Uplink Shared Channel |
| • | WD | Wireless Device |

Those skilled in the art will recognize improvements and modifications to the preferred embodiments of the present disclosure. All such improvements and modifications are considered within the scope of the appended claims.

## Claims

1. A method performed by a base station (12) for a cellular communications network (10), comprising:
obtaining device-to-device capability information for a plurality of wireless devices (16) that indicates that the plurality of wireless devices (16) are physically capable of device-to-device communication;
receiving a device-to-device request from a first wireless device (16);
determining that a device-to-device initialization procedure is to be performed; and
in response to determining that the device-to-device initialization procedure is to be performed, transmitting a positive device-to-device decision to the first wireless device (16) that comprises information that enables the first wireless device (16) to establish device-to-device device communication with a second wireless device (16), the second wireless device (16) being one of the plurality of wireless devices (16),
wherein the plurality of wireless devices (16) that are physically capable of device-to-device communication comprises a first plurality of wireless devices (16) that are physically capable of device-to-device communication and located within a cell (14) served by the base station (12), and a second plurality of wireless devices (16) that are physically capable of device-to-device communication and located within one or more neighboring cells adjacent to the cell (14) served by the base station (12), and
wherein obtaining the device-to-device capability information comprises, for each wireless device (16) of at least some of the second plurality of wireless devices (16), receiving device-to-device capability information for the wireless device (16) from a corresponding base station that serves a corresponding neighboring cell.

2. The method of claim 1 wherein determining that the device-to-device initialization procedure is to be performed comprises determining that the first wireless device (16) and the second wireless device (16) are within a threshold geographic distance of each other and/or that the first wireless device (16) and the second wireless device (16) are within a threshold radio distance of each other.

3. The method of claim 1 or 2 wherein determining that the device-to-device initialization procedure is to be performed comprises determining that the second wireless device (16) is physically capable of sharing at least one of a group consisting of: a particular content item requested in the device-to-device request from the first wireless device (16), a particular content type requested in the device-to-device request from the first wireless device (16), a particular service requested in the device-to-device request from the first wireless device (16), and a particular service type requested in the device-to-device request from the first wireless device (16).

4. The method of claim 1 wherein the device-to-device request from the first wireless device (16) comprises information that is indicative of a geographic location of the first wireless device (16).

5. The method of claim 1 wherein:
determining that the device-to-device initialization procedure is to be performed comprises selecting one or more wireless devices, including the second wireless device (16), that are preferred for device-to-device communication with the first wireless device (16) from the plurality of wireless devices (16) that are physically capable of device-to-device communication; and
the positive device-to-device decision comprises a list of identifiers of the one or more wireless devices selected from the plurality of wireless devices (16) as being preferred for device-to-device communication with the first wireless device (16).

6. The method of claim 5 wherein:
the one or more wireless devices selected from the plurality of wireless devices (16) as being preferred for device-to-device communication with the first wireless device (16) is two or more wireless devices;
determining that the device-to-device initialization procedure is to be performed further comprises prioritizing the two or more wireless devices with respect to device-to-device communication with the first wireless device (16); and
the list of identifiers in the positive device-to-device decision reflects priorities of the two or more wireless devices with respect to device-to-device communication with the first wireless device (16).

7. The method of claim 6 wherein prioritizing the two or more wireless devices with respect to device-to-device communication with the first wireless device (16) comprises prioritizing the two or more wireless devices based on proximity to the first wireless device (16).

8. The method of claim 1 wherein the positive device-to-device decision comprises one or more of the following:
information that is indicative of physical resources to be used for device-to-device communication between the first wireless device (16) and the second wireless device (16);
information that is indicative of a Physical Uplink Control Channel resource to be used by the first wireless device (16) and the second wireless device (16) to exchange control commands for device-to-device communication between the first wireless device (16) and the second wireless device (16);
information that is indicative of Physical Random Access Channel resources to be used by the first wireless device (16) for a device-to-device discovery procedure to discover the second wireless device (16); and
information that is indicative of a Physical Random Access Channel power setting to be used by the first wireless device (16) for a device-to-device discovery procedure to discover the second wireless device (16).

9. The method of claim 1 wherein the device-to-device request is included in a Radio Resource Control Connection Request from the first wireless device (16).

10. The method of claim 9 wherein transmitting the positive device-to-device decision to the first wireless device (16) comprises transmitting the positive device-to-device decision to the first wireless device (16) in a Radio Resource Control Setup message.

11. The method of claim 1 wherein obtaining the device-to-device capability information comprises one of the following:
for each wireless device (16) of at least some of the first plurality of wireless devices (16), receiving device-to-device capability information for the wireless device (16) from the wireless device (16); and
for each wireless device (16) of at least some of the first plurality of wireless devices (16), receiving device-to-device capability information for the wireless device (16) from the cellular communications network (10) during a handover of the wireless device (16) from the cell (14) served by a second base station (12) to a cell (14) served by the base station (12).

12. The method of claim 1 wherein, if the second wireless device (16) is in an idle mode, the method further comprises effecting transmission of a paging message to the second wireless device (16).

13. A base station (12) for a cellular communications network (10), comprising:
a radio subsystem (18); and
a processing subsystem (20) associated with the radio subsystem (18), the processing subsystem (20) configured to:
obtain device-to-device capability information for a plurality of wireless devices (16) that are capable of device-to-device communication;
receive a device-to-device request from a first wireless device (16);
determine that a device-to-device initialization procedure is to be performed; and
in response to determining that the device-to-device initialization procedure is to be performed, transmit a positive device-to-device decision to the first wireless device (16) that comprises information that enables the first wireless device (16) to establish device-to-device device communication with a second wireless device (16), the second wireless device (16) being one of the plurality of wireless devices (16),
wherein the plurality of wireless devices (16) that are physically capable of device-to-device communication comprises a first plurality of wireless devices (16) that are physically capable of device-to-device communication and located within a cell (14) served by the base station (12), and a second plurality of wireless devices (16) that are physically capable of device-to-device communication and located within one or more neighboring cells adjacent to the cell (14) served by the base station (12), and
wherein the processing subsystem is further configured to obtain the device-to-device capability information by at least, for each wireless device (16) of at least some of the second plurality of wireless devices (16), receiving device-to-device capability information for the wireless device (16) from a corresponding base station that serves a corresponding neighboring cell.

14. A method performed by a base station (12) for a cellular communications network (10), comprising:
obtaining device-to-device capability information for a plurality of wireless devices (16) that indicates that the plurality of wireless devices (16) are physically capable of device-to-device communication;
receiving a device-to-device request from a first wireless device (16);
determining that a device-to-device initialization procedure is to be performed; and
in response to determining that the device-to-device initialization procedure is to be performed, effecting transmission of a paging message to a second wireless device (16) from the plurality of wireless devices (16) selected for device-to-device communication with the first wireless device (16), the paging message comprising information that enables the second wireless device (16) to establish device-to-device communication with the first wireless device (16), wherein effecting transmission of the paging message to the second wireless device (16) comprises causing a second base station (12) to transmit the paging message to the second wireless device (16).

15. A base station (12) for a cellular communications network (10), comprising:
a radio subsystem (18); and
a processing subsystem (20) associated with the radio subsystem (18), the processing subsystem (20) configured to:
obtain device-to-device capability information for a plurality of wireless devices (16) that indicates that the plurality of wireless devices (16) are physically capable of device-to-device communication;
receive a device-to-device request from a first wireless device (16);
determine that a device-to-device initialization procedure is to be performed; and
in response to determining that the device-to-device initialization procedure is to be performed, effect transmission of a paging message to a second wireless device (16) from the plurality of wireless devices (16) selected for device-to-device communication with the first wireless device (16), the paging message comprising information that enables the second wireless device (16) to establish device-to-device device communication with the first wireless device (16), wherein effecting transmission of the paging message to the second wireless device (16) comprises causing a second base station (12) to transmit the paging message to the second wireless device (16).

## Patentansprüche

1. Verfahren, das von einer Basisstation (12) für ein zellulares Kommunikationsnetzwerk (10) durchgeführt wird und umfasst:
Abrufen von Gerät-zu-Gerät-Fähigkeitsinformationen für eine Mehrzahl von drahtlosen Geräten (16), die angeben, dass die Mehrzahl von drahtlosen Geräten (16) physikalisch zu Gerät-zu-Gerät-Kommunikation imstande ist;
Empfangen einer Gerät-zu-Gerät-Anforderung von einem ersten drahtlosen Gerät (16);
Bestimmen, dass eine Gerät-zu-Gerät-Initialisierungsprozedur durchgeführt werden soll; und
Senden in Reaktion auf das Bestimmen, dass die Gerät-zu-Gerät-Initialisierungsprozedur durchgeführt werden soll, einer positiven Gerät-zu-Gerät-Entscheidung an das erste drahtlose Gerät (16), die Informationen umfasst, die das erste drahtlose Gerät (16) zum Aufbauen von Gerät-zu-Gerät-Gerätekommunikation mit einem zweiten drahtlosen Gerät (16) befähigen, wobei das zweite drahtlose Gerät (16) eines der Mehrzahl von drahtlosen Geräten (16) ist,
wobei die Mehrzahl von drahtlosen Geräten (16), die physikalisch zu Gerät-zu-Gerät-Kommunikation imstande sind, eine erste Mehrzahl von drahtlosen Geräten (16), die physikalisch zu Gerät-zu-Gerät-Kommunikation imstande sind und sich innerhalb einer Zelle (14) befinden, die von der Basisstation (12) versorgt wird, und eine zweite Mehrzahl von drahtlosen Geräten (16) umfasst, die physikalisch zu Gerät-zu-Gerät-Kommunikation imstande sind und sich innerhalb einer oder mehrerer Nachbarzellen benachbart zu der von der Basisstation (12) versorgten Zelle (14) befinden, und
wobei das Abrufen der Gerät-zu-Gerät-Fähigkeitsinformationen für jedes drahtlose Gerät (16) wenigstens einiger der zweiten Mehrzahl von drahtlosen Geräten (16) ein Empfangen von Gerät-zu-Gerät-Fähigkeitsinformationen für das drahtlose Gerät (16) von einer entsprechenden Basisstation umfasst, die eine entsprechende Nachbarzelle versorgt.

2. Verfahren nach Anspruch 1, wobei das Bestimmen, dass die Gerät-zu-Gerät-Initialisierungsprozedur durchgeführt werden soll, ein Bestimmen umfasst, dass das erste drahtlose Gerät (16) und das zweite drahtlose Gerät (16) innerhalb einer geografischen Schwellendistanz voneinander sind, und/oder dass das erste drahtlose Gerät (16) und das zweite drahtlose Gerät (16) innerhalb einer Schwellen-Funkdistanz voneinander sind.

3. Verfahren nach Anspruch 1 oder 2, wobei das Bestimmen, dass die Gerät-zu-Gerät-Initialisierungsprozedur durchgeführt werden soll, ein Bestimmen umfasst, dass das zweite drahtlose Gerät (16) physikalisch imstande ist zum Teilen mindestens eines von einer Gruppe bestehend aus: einem bestimmten Inhaltselement, das in der Gerät-zu-Gerät-Anforderung vom ersten drahtlosen Gerät (16) angefordert wird, einem bestimmten Inhaltstyp, der in der Gerät-zu-Gerät-Anforderung vom ersten drahtlosen Gerät (16) angefordert wird, einem bestimmten Dienst, der in der Gerät-zu-Gerät-Anforderung vom ersten drahtlosen Gerät (16) angefordert wird, und einem bestimmten Diensttyp, der in der Gerät-zu-Gerät-Anforderung vom ersten drahtlosen Gerät (16) angefordert wird.

4. Verfahren nach Anspruch 1, wobei die Gerät-zu-Gerät-Anforderung vom ersten drahtlosen Gerät (16) Informationen umfasst, die einen geografischen Aufenthaltsort des ersten drahtlosen Geräts (16) angeben.

5. Verfahren nach Anspruch 1, wobei:
das Bestimmen, dass die Gerät-zu-Gerät-Initialisierungsprozedur durchgeführt werden soll, ein Auswählen eines oder mehrerer drahtloser Geräte, die das zweite drahtlose Gerät (16) umfassen und die für Gerät-zu-Gerät-Kommunikation mit dem ersten drahtlosen Gerät (16) bevorzugt werden, aus der Mehrzahl von drahtlosen Geräten (16) umfasst, die physikalisch zu Gerät-zu-Gerät-Kommunikation imstande sind; und
die positive Gerät-zu-Gerät-Entscheidung eine Liste von Kennungen des einen oder der mehreren drahtlosen Geräte umfasst, die aus der Mehrzahl von drahtlosen Geräten (16) als für Gerät-zu-Gerät-Kommunikation mit dem ersten drahtlosen Gerät (16) bevorzugt ausgewählt werden.

6. Verfahren nach Anspruch 5, wobei:
es sich bei dem einen oder den mehreren aus der Mehrzahl von drahtlosen Geräten (16) als für Gerät-zu-Gerät-Kommunikation mit dem ersten drahtlosen Gerät (16) bevorzugt ausgewählten drahtlosen Geräten um zwei oder mehr drahtlose Geräte handelt;
das Bestimmen, dass die Gerät-zu-Gerät-Initialisierungsprozedur durchgeführt werden soll, ferner ein Priorisieren der zwei oder mehr drahtlosen Geräte in Bezug auf Gerät-zu-Gerät-Kommunikation mit dem ersten drahtlosen Gerät (16) umfasst; und
die Liste der Kennungen in der positiven Gerät-zu-Gerät-Entscheidung Prioritäten der zwei oder mehr drahtlosen Geräte in Bezug auf Gerät-zu-Gerät-Kommunikation mit dem ersten drahtlosen Gerät (16) widerspiegelt.

7. Verfahren nach Anspruch 6, wobei das Priorisieren der zwei oder mehr drahtlosen Geräte in Bezug auf Gerät-zu-Gerät-Kommunikation mit dem ersten drahtlosen Gerät (16) ein Priorisieren der zwei der mehr drahtlosen Geräte basierend auf einer Nähe zum ersten drahtlosen Gerät (16) umfasst.

8. Verfahren nach Anspruch 1, wobei die Gerät-zu-Gerät-Entscheidung eine oder mehrere von Folgenden umfasst:
Informationen, die physikalische Ressourcen angeben, die für Gerät-zu-Gerät-Kommunikation zwischen dem ersten drahtlosen Gerät (16) und dem zweiten drahtlosen Gerät (16) verwendet werden sollen;
Informationen, die eine Ressource eines physikalischen Uplink-Steuerkanals angeben, die vom ersten drahtlosen Gerät (16) und dem zweiten drahtlosen Gerät (16) zum Austauschen von Befehlen für Gerät-zu-Gerät-Kommunikation zwischen dem ersten drahtlosen Gerät (16) und dem zweiten drahtlosen Gerät (16) verwendet werden soll;
Informationen, die Ressourcen eines physikalischen Direktzugriffskanals angeben, die vom ersten drahtlosen Gerät (16) für eine Gerät-zu-Gerät-Erkennungsprozedur zum Erkennen des zweiten drahtlosen Geräts (16) verwendet werden sollen; und
Informationen, die eine Leistungseinstellung eines physikalischen Direktzugriffskanals angeben, die vom ersten drahtlosen Gerät (16) für eine Gerät-zu-Gerät-Erkennungsprozedur zum Erkennen des zweiten drahtlosen Geräts (16) verwendet werden soll.

9. Verfahren nach Anspruch 1, wobei die Gerät-zu-Gerät-Anforderung in einer Funkressourcensteuerungs-Verbindungsanforderung vom ersten drahtlosen Gerät (16) enthalten ist.

10. Verfahren nach Anspruch 9, wobei das Senden der positiven Gerät-zu-Gerät-Entscheidung an das erste drahtlose Gerät (16) ein Senden der positiven Gerät-zu-Gerät-Entscheidung in einer Funkressourcensteuerungs-Setup-Nachricht an das erste drahtlose Gerät (16) umfasst.

11. Verfahren nach Anspruch 1, wobei das Abrufen der Gerät-zu-Gerät- Fähigkeitsinformationen eines von Folgendem umfasst:
Empfangen für jedes drahtlose Gerät (16) wenigstens einiger der ersten Mehrzahl von drahtlosen Geräten (16) von Gerät-zu-Gerät-Fähigkeitsinformationen für das drahtlose Gerät (16) vom drahtlosen Gerät (16); und
Empfangen für jedes drahtlose Gerät (16) wenigstens einiger der ersten Mehrzahl von drahtlosen Geräten (16) von Gerät-zu-Gerät-Fähigkeitsinformationen für das drahtlose Gerät (16) vom zellularen Kommunikationsnetzwerk (10) während einer Übergabe des drahtlosen Geräts (16) von der Zelle (14), die von einer zweiten Basisstation (12) versorgt wird, an eine Zelle (14), die von der Basisstation (12) versorgt wird.

12. Verfahren nach Anspruch 1, wobei das Verfahren, wenn das zweite drahtlose Gerät (16) in einem Ruhemodus ist, ferner ein Durchführen von Übertragung einer Funkrufnachricht an das zweite drahtlose Gerät (16) umfasst.

13. Basisstation (12) für ein zellulares Kommunikationsnetzwerk (10), umfassend:
ein Funksubsystem (18); und
ein Verarbeitungssubsystem (20), das mit dem Funksubsystem (18) assoziiert ist, wobei das Verarbeitungssubsystem (20) konfiguriert ist zum:
Abrufen von Gerät-zu-Gerät-Fähigkeitsinformationen für eine Mehrzahl von drahtlosen Geräten (16), die zu Gerät-zu-Gerät-Kommunikation imstande sind;
Empfangen einer Gerät-zu-Gerät-Anforderung von einem ersten drahtlosen Gerät (16);
Bestimmen, dass eine Gerät-zu-Gerät-Initialisierungsprozedur durchgeführt werden soll; und
Senden in Reaktion auf das Bestimmen, dass die Gerät-zu-Gerät-Initialisierungsprozedur durchgeführt werden soll, einer positiven Gerät-zu-Gerät-Entscheidung an das erste drahtlose Gerät (16), die Informationen umfasst, die das erste drahtlose Gerät (16) zum Aufbauen von Gerät-zu-Gerät-Gerätekommunikation mit einem zweiten drahtlosen Gerät (16) befähigen, wobei das zweite drahtlose Gerät (16) eines der Mehrzahl von drahtlosen Geräten (16) ist,
wobei die Mehrzahl von drahtlosen Geräten (16), die physikalisch zu Gerät-zu-Gerät-Kommunikation imstande sind, eine erste Mehrzahl von drahtlosen Geräten (16), die physikalisch zu Gerät-zu-Gerät-Kommunikation imstande sind und sich innerhalb einer Zelle (14) befinden, die von der Basisstation (12) versorgt wird, und eine zweite Mehrzahl von drahtlosen Geräten (16) umfasst, die physikalisch zu Gerät-zu-Gerät-Kommunikation imstande sind und sich innerhalb einer oder mehrerer Nachbarzellen benachbart zu der von der Basisstation (12) versorgten Zelle (14) befinden, und
wobei das Verarbeitungssubsystem ferner zum Abrufen der Gerät-zu-Gerät-Fähigkeitsinformationen für jedes drahtlose Gerät (16) wenigstens einiger der zweiten Mehrzahl von drahtlosen Geräten (16) durch Empfangen von Gerät-zu-Gerät-Fähigkeitsinformationen für das drahtlose Gerät (16) von einer entsprechenden Basisstation konfiguriert ist, die eine entsprechende Nachbarzelle versorgt.

14. Verfahren, das von einer Basisstation (12) für ein zellulares Kommunikationsnetzwerk (10) durchgeführt wird und umfasst:
Abrufen von Gerät-zu-Gerät-Fähigkeitsinformationen für eine Mehrzahl von drahtlosen Geräten (16), die angeben, dass die Mehrzahl von drahtlosen Geräten (16) physikalisch zu Gerät-zu-Gerät-Kommunikation imstande ist;
Empfangen einer Gerät-zu-Gerät-Anforderung von einem ersten drahtlosen Gerät (16);
Bestimmen, dass eine Gerät-zu-Gerät-Initialisierungsprozedur durchgeführt werden soll; und
Durchführen in Reaktion auf das Bestimmen, dass die Gerät-zu-Gerät-Initialisierungsprozedur durchgeführt werden soll, von Übertragung einer Funkrufnachricht an ein zweites drahtloses Gerät (16) aus der Mehrzahl von drahtlosen Geräten (16), die für Gerät-zu-Gerät-Kommunikation mit dem ersten drahtlosen Gerät (16) ausgewählt werden, wobei die Funkrufnachricht Informationen umfasst, die das zweite drahtlose Gerät (16) zum Aufbauen von Gerät-zu-Gerät-Kommunikation mit dem ersten drahtlosen Gerät (16) befähigen, wobei das Durchführen der Übertragung der Funkrufnachricht an das zweite drahtlose Gerät (16) ein Veranlassen einer zweiten Basisstation (12) zum Senden der Funkrufnachricht an das zweite drahtlose Gerät (16) umfasst.

15. Basisstation (12) für ein zellulares Kommunikationsnetzwerk (10), umfassend:
ein Funksubsystem (18); und
ein Verarbeitungssubsystem (20), das mit dem Funksubsystem (18) assoziiert ist, wobei das Verarbeitungssubsystem (20) konfiguriert ist zum:
Abrufen von Gerät-zu-Gerät-Fähigkeitsinformationen für eine Mehrzahl von drahtlosen Geräten (16), die angeben, dass die Mehrzahl von drahtlosen Geräten (16) physikalisch zu Gerät-zu-Gerät-Kommunikation imstande ist;
Empfangen einer Gerät-zu-Gerät-Anforderung von einem ersten drahtlosen Gerät (16);
Bestimmen, dass eine Gerät-zu-Gerät-Initialisierungsprozedur durchgeführt werden soll; und
Durchführen in Reaktion auf das Bestimmen, dass die Gerät-zu-Gerät-Initialisierungsprozedur durchgeführt werden soll, von Übertragung einer Funkrufnachricht an ein zweites drahtloses Gerät (16) aus der Mehrzahl von drahtlosen Geräten (16), die für Gerät-zu-Gerät-Kommunikation mit dem ersten drahtlosen Gerät (16) ausgewählt werden, wobei die Funkrufnachricht Informationen umfasst, die das zweite drahtlose Gerät (16) zum Aufbauen von Gerät-zu-Gerät-Gerätekommunikation mit dem ersten drahtlosen Gerät (16) befähigen, wobei das Durchführen der Übertragung der Funkrufnachricht an das zweite drahtlose Gerät (16) ein Veranlassen einer zweiten Basisstation (12) zum Senden der Funkrufnachricht an das zweite drahtlose Gerät (16) umfasst.

## Revendications

1. Procédé effectué par une station de base (12) pour un réseau de communication cellulaire (10), comprenant :
l'obtention d'informations de capacité de dispositif à dispositif pour une pluralité de dispositifs sans fil (16) indiquant que la pluralité de dispositifs sans fil (16) sont capables physiquement d'une communication de dispositif à dispositif ;
la réception d'une demande de dispositif à dispositif en provenance d'un premier dispositif sans fil (16) ;
la détermination qu'une procédure d'initialisation de dispositif à dispositif doit être effectuée ; et
en réponse à la détermination que la procédure d'initialisation de dispositif à dispositif doit être effectuée, la transmission d'une décision de dispositif à dispositif positive à destination du premier dispositif sans fil (16) comprenant des informations permettant au premier dispositif sans fil (16) d'établir une communication de dispositif à dispositif avec un deuxième dispositif sans fil (16), le deuxième dispositif sans fil (16) étant l'un de la pluralité de dispositifs sans fil (16),
dans lequel la pluralité de dispositifs sans fil (16) capables physiquement d'une communication de dispositif à dispositif comprend une première pluralité de dispositifs sans fil (16) qui sont capables physiquement d'une communication de dispositif à dispositif et qui sont situés à l'intérieur d'une cellule (14) desservie par la station de base (12), et une deuxième pluralité de dispositifs sans fil (16) qui sont capables physiquement d'une communication de dispositif à dispositif et qui sont situés à l'intérieur d'une ou plusieurs cellules voisines adjacentes à la cellule (14) desservie par la station de base (12), et
dans lequel l'obtention d'informations de capacité de dispositif à dispositif comprend, pour chaque dispositif sans fil (16) d'au moins certains de la deuxième pluralité de dispositifs sans fil (16), la réception d'informations de capacité de dispositif à dispositif pour le dispositif sans fil (16) en provenance d'une station de base correspondante desservant une cellule voisine correspondante.

2. Procédé selon la revendication 1, dans lequel la détermination que la procédure d'initialisation de dispositif à dispositif doit être effectuée comprend la détermination que le premier dispositif sans fil (16) et le deuxième dispositif sans fil (16) sont à au plus une distance géographique de seuil l'un de l'autre et/ou que le premier dispositif sans fil (16) et le deuxième dispositif sans fil (16) sont à au plus une distance radio de seuil l'un de l'autre.

3. Procédé selon la revendication 1 ou 2, dans lequel la détermination que la procédure d'initialisation de dispositif à dispositif doit être effectuée comprend la détermination que le deuxième dispositif sans fil (16) est capable physiquement de partager au moins l'un d'un groupe se composant de: un élément de contenu particulier demandé dans la demande de dispositif à dispositif depuis le premier dispositif sans fil (16), un type de contenu particulier demandé dans la demande de dispositif à dispositif depuis le premier dispositif sans fil (16), un service particulier demandé dans la demande de dispositif à dispositif depuis le premier dispositif sans fil (16), et un type de service particulier demandé dans la demande de dispositif à dispositif depuis le premier dispositif sans fil (16).

4. Procédé selon la revendication 1, dans lequel la demande de dispositif à dispositif depuis le premier dispositif sans fil (16) comprend des informations indicatives d'un emplacement géographique du premier dispositif sans fil (16).

5. Procédé selon la revendication 1, dans lequel :
la détermination que la procédure d'initialisation de dispositif à dispositif doit être effectuée comprend la sélection d'un ou plusieurs dispositifs sans fil, y compris le deuxième dispositif sans fil (16), qui sont préférés pour une communication de dispositif à dispositif avec le premier dispositif sans fil (16) parmi la pluralité de dispositifs sans fil (16) qui sont capables physiquement d'une communication de dispositif à dispositif ; et
la décision de dispositif à dispositif positive comprend une liste d'identifiants des un ou plusieurs dispositifs sans fil sélectionnés parmi la pluralité de dispositifs sans fil (16) comme étant préférés pour une communication de dispositif à dispositif avec le premier dispositif sans fil (16).

6. Procédé selon la revendication 5, dans lequel :
les un ou plusieurs dispositifs sans fil sélectionnés parmi la pluralité de dispositifs sans fil (16) comme étant préférés pour une communication de dispositif à dispositif avec le premier dispositif sans fil (16) sont au moins deux dispositifs sans fil ;
la détermination que la procédure d'initialisation de dispositif à dispositif doit être effectuée comprend en outre la priorisation des au moins deux dispositifs sans fil en ce qui concerne une communication de dispositif à dispositif avec le premier dispositif sans fil (16) ; et
la liste d'identifiants dans la décision de dispositif à dispositif positive reflète des priorités des au moins deux dispositifs sans fil en ce qui concerne une communication de dispositif à dispositif avec le premier dispositif sans fil (16).

7. Procédé selon la revendication 6, dans lequel la priorisation des au moins deux dispositifs sans fil en ce qui concerne une communication de dispositif à dispositif avec le premier dispositif sans fil (16) comprend la priorisation des au moins deux dispositifs sans fil sur la base d'une proximité du premier dispositif sans fil (16).

8. Procédé selon la revendication 1, dans lequel la décision de dispositif à dispositif positive comprend une ou plusieurs de :
des informations indicatives de ressources physiques à utiliser pour une communication de dispositif à dispositif entre le premier dispositif sans fil (16) et le deuxième dispositif sans fil (16) ;
des informations indicatives d'une ressource de canal de commande de liaison montante physique à utiliser par le premier dispositif sans fil (16) et le deuxième dispositif sans fil (16) pour échanger des commandes pour une communication de dispositif à dispositif entre le premier dispositif sans fil (16) et le deuxième dispositif sans fil (16) ;
des informations indicatives de ressources de canal d'accès aléatoire physique à utiliser par le premier dispositif sans fil (16) pour une procédure de découverte de dispositif à dispositif pour découvrir le deuxième dispositif sans fil (16) ; et
des informations indicatives d'un réglage de puissance de canal d'accès aléatoire physique à utiliser par le premier dispositif sans fil (16) pour une procédure de découverte de dispositif à dispositif pour découvrir le deuxième dispositif sans fil (16).

9. Procédé selon la revendication 1, dans lequel la demande de dispositif à dispositif est incluse dans une demande de connexion de commande de ressources radio depuis le premier dispositif sans fil (16).

10. Procédé selon la revendication 9, dans lequel la transmission de la décision de dispositif à dispositif positive au premier dispositif sans fil (16) comprend la transmission de la décision de dispositif à dispositif positive à destination du premier dispositif sans fil (16) dans un message de configuration de commande de ressources radio.

11. Procédé selon la revendication 1, dans lequel l'obtention d'informations de capacité de dispositif à dispositif comprend l'une de :
pour chaque dispositif sans fil (16) d'au moins certains de la première pluralité de dispositifs sans fil (16), la réception d'informations de capacité de dispositif à dispositif pour le dispositif sans fil (16) en provenance du dispositif sans fil (16) ; et
pour chaque dispositif sans fil (16) d'au moins certains de la première pluralité de dispositifs sans fil (16), la réception d'informations de capacité de dispositif à dispositif pour le dispositif sans fil (16) en provenance du réseau de communication cellulaire (10) au cours d'un transfert intercellulaire du dispositif sans fil (16) de la cellule (14) desservie par une deuxième station de base (12) à une cellule (14) desservie par la station de base (12).

12. Procédé selon la revendication 1, dans lequel, si le deuxième dispositif sans fil (16) est dans un mode de veille, le procédé comprend en outre l'exécution d'une transmission d'un message de radiomessagerie à destination du deuxième dispositif sans fil (16).

13. Station de base (12) pour un réseau de communication cellulaire (10), comprenant :
un sous-système radio (18) ; et
un sous-système de traitement (20) associé au sous-système radio (18), le sous-système de traitement (20) étant configuré pour :
l'obtention d'informations de capacité de dispositif à dispositif pour une pluralité de dispositifs sans fil (16) qui sont capables d'une communication de dispositif à dispositif ;
la réception d'une demande de dispositif à dispositif en provenance d'un premier dispositif sans fil (16) ;
la détermination qu'une procédure d'initialisation de dispositif à dispositif doit être effectuée ; et
en réponse à la détermination que la procédure d'initialisation de dispositif à dispositif doit être effectuée, la transmission d'une décision de dispositif à dispositif positive à destination du premier dispositif sans fil (16) comprenant des informations permettant au premier dispositif sans fil (16) d'établir une communication de dispositif à dispositif avec un deuxième dispositif sans fil (16), le deuxième dispositif sans fil (16) étant l'un de la pluralité de dispositifs sans fil (16),
dans laquelle la pluralité de dispositifs sans fil (16) capables physiquement d'une communication de dispositif à dispositif comprend une première pluralité de dispositifs sans fil (16) qui sont capables physiquement d'une communication de dispositif à dispositif et qui sont situés à l'intérieur d'une cellule (14) desservie par la station de base (12), et une deuxième pluralité de dispositifs sans fil (16) qui sont capables physiquement d'une communication de dispositif à dispositif et qui sont situés à l'intérieur d'une ou plusieurs cellules voisines adjacentes à la cellule (14) desservie par la station de base (12), et
dans laquelle le sous-système de traitement est en outre configuré pour l'obtention des informations de capacité de dispositif à dispositif par au moins, pour chaque dispositif sans fil (16) d'au moins certains de la deuxième pluralité de dispositifs sans fil (16), la réception d'informations de capacité de dispositif à dispositif pour le dispositif sans fil (16) en provenance d'une station de base correspondante desservant une cellule voisine correspondante.

14. Procédé effectué par une station de base (12) pour un réseau de communication cellulaire (10), comprenant :
l'obtention d'informations de capacité de dispositif à dispositif pour une pluralité de dispositifs sans fil (16) indiquant que la pluralité de dispositifs sans fil (16) sont capables physiquement d'une communication de dispositif à dispositif ;
la réception d'une demande de dispositif à dispositif en provenance d'un premier dispositif sans fil (16) ;
la détermination qu'une procédure d'initialisation de dispositif à dispositif doit être effectuée ; et
en réponse à la détermination que la procédure d'initialisation de dispositif à dispositif doit être effectuée, l'exécution d'une transmission d'un message de radiomessagerie à destination d'un deuxième dispositif sans fil (16) de la pluralité de dispositifs sans fil (16) sélectionné pour une communication de dispositif à dispositif avec le premier dispositif sans fil (16), le message de radiomessagerie comprenant des informations permettant au deuxième dispositif sans fil (16) d'établir une communication de dispositif à dispositif avec le premier dispositif sans fil (16), dans lequel l'exécution d'une transmission du message de radiomessagerie à destination du deuxième dispositif sans fil (16) comprend l'instruction à une deuxième station de base (12) de transmettre le message de radiomessagerie à destination du deuxième dispositif sans fil (16).

15. Station de base (12) pour un réseau de communication cellulaire (10), comprenant :
un sous-système radio (18) ; et
un sous-système de traitement (20) associé au sous-système radio (18), le sous-système de traitement (20) étant configuré pour :
l'obtention d'informations de capacité de dispositif à dispositif pour une pluralité de dispositifs sans fil (16) indiquant que la pluralité de dispositifs sans fil (16) sont capables physiquement d'une communication de dispositif à dispositif ;
la réception d'une demande de dispositif à dispositif en provenance d'un premier dispositif sans fil (16) ;
la détermination qu'une procédure d'initialisation de dispositif à dispositif doit être effectuée ; et
en réponse à la détermination que la procédure d'initialisation de dispositif à dispositif doit être effectuée, l'exécution d'une transmission d'un message de radiomessagerie à destination d'un deuxième dispositif sans fil (16) de la pluralité de dispositifs sans fil (16) sélectionné pour une communication de dispositif à dispositif avec le premier dispositif sans fil (16), le message de radiomessagerie comprenant des informations permettant au deuxième dispositif sans fil (16) d'établir une communication de dispositif à dispositif avec le premier dispositif sans fil (16),
dans laquelle l'exécution d'une transmission du message de radiomessagerie à destination du deuxième dispositif sans fil (16) comprend l'instruction à une deuxième station de base (12) de transmettre le message de radiomessagerie à destination du deuxième dispositif sans fil (16).
